# EUROPEAN PATENT APPLICATION

(11) **EP 2 023 430 A1**
(43) Date of publication of application: **11.02.2009**
(21) Application number: 07744002.2
(22) Date of filing: 24.05.2007
(51) Int. Cl.: H01M 8/04, B65D 47/28, B65D 83/00

(54) **REFUELING CONTAINER**

(30) Priority: 26.05.2006 JP 2006146366; 26.05.2006 JP 2006146367; 26.05.2006 JP 2006146368
(71) Applicant: TOYO SEIKAN KAISHA, LTD., Tokyo 100-8522 (JP); Kabushiki Kaisha Toshiba, Minato-ku, Tokyo 105-8001 (JP)
(72) Inventor: YOSHIHIRO, Kenji, Yokohama-shi Kanagawa 230-0001 (JP); HONDA, Tetsuya, Yokohama-shi Kanagawa 230-0001 (JP); TAKAHASHI, Kenichi, Yokohama-shi Kanagawa 235-8523 (JP)
(74) Representative: Liebetanz, Michael
(86) International application number: PCT/JP2007/060568
(87) International publication number: WO 2007/138963

(57) **Abstract**

A convex stripe 231 is disposed on the side surface of a coupler 20 and a step portion 53 of the cylinder member 50 is brought into contact with the upper surface of the convex stripe 231, to thereby engage the cylinder member 50 with the coupler 20 and also to fit a fitting projection 312 formed on a rising portion 31 into a fitting hole 51 of the cylinder member 50, thereby allowing the cylinder member 50 to be stretched over and installed on the coupler 20 and the side surfaces of rising portion 31, making difficult to dismount the coupler 20.

## Description

### Technical Field

The present invention relates to a refuelling container that injects and supplies fuel from the outside into a fuel receiving unit of a fuel cell reduced in the residual quantity of the fuel in the fuel cell, such as a direct methanol type fuel cell, operated in such a manner that liquid fuel such as alcohols is supplied directly without using a reformer to undergo an electrochemical reaction.

### Background art

In recent years, direct methanol type fuel cells (DMFC) in which fuel methanol is supplied directly to the anode (fuel electrode) without using a reformer that extracts hydrogen (proton) to undergo an electrochemical reaction have attracted as, particularly, fuel cells for portable devices because they are adequate for miniaturization of devices. In addition, fuel supply means used in these DMFCs are variously proposed.

For example, in Patent Document 1, there is the description that using a refuelling container which is integrated using a flexible resin and in which methanol is sealed, a refuelling container side valve provided in this refuelling container is connected with a valve of a fuel cell to connect the fuel cell with the refuelling container and then, the refuelling container is squeezed to thereby inject methanol into a fuel receiving unit of the fuel cell.

Here, the refuelling container described in Patent Document 1 is designed to have a structure in which a piston in the refuelling container side valve is pressed against a seal portion by a spring and a screw portion is formed at the tapered end portion provided with such a refuelling container side valve.
Then, a valve of the fuel cell has the same structure as the refuelling container side valve, and is so designed that the screw portion of the refuelling container side valve is screwed into the screw portion of the valve of the fuel cell, thereby engaging the both with each other while making the counterparts of the pistons are made to be in contact with each other and these pistons are slid in a direction opposite to the direction of the force of the spring to open both valves, whereby methanol in the refuelling container can be injected into the fuel receiving unit of the fuel cell.
Patent Document 1: Japanese Patent Application Laid-open 2005-63726

### Disclosure of the Invention

### Problem to be solved by the invention

In the meantime, such a refuelling container of Patent Document 1 has the problem that it is producible simply at low costs, but on the other hand, the shape of the screw portion that screws the refuelling container into the valve of the fuel cell is scarcely formed sharply and the container has insufficient strength because the refuelling container is integrated using a relatively soft material, and there is therefore a fear that the both are engaged with each other with uncertainty.

Fig. 2 of Patent Document 1 reveals that the screw portion is provided as a separate member integrated with the end portion of the refuelling container so as to function as a stopper for preventing slip-out of the piston which forms the valve. Such an idea also occurs that this member is formed of a hard base material to thereby sharpen the shape of the screw portion and to secure the strength.

However, in any case of bonding and fusion, there is a limitation to a combination of different materials to be integrated with each other and it is therefore difficult to couple the refuelling container made of a flexible material with a member made of hard base material. Particularly, when the refuelling container body is multi-layered, the range of selection of the material for the member to be integrated with this is significantly narrowed.

There is also the idea that these different materials are physically integrated with each other by thread fastening or concave-convex fitting. However, in this case, there is a fear as to, for example, falling caused by insufficient strength of the binding portion made of the flexible material.
Also, in the case of thread fastening, there is a fear as to generation of frictional powdery refuses resulting from friction among members when these members are fastened by screwing. Then, these frictional refuses are mixed in the fuel filled in the refuelling container, giving rise to the problem concerning disorders such as denaturing of the fuel and clogging.

The present invention have been made in view of the above situation and it is an object of the present invention to propose a refuelling container having the characteristics that even in the case where different materials are used for a coupler provided with a valve mechanism to be bound with a valve of the fuel cell and a refuelling container body respectively depending on each purpose, the coupler cannot be detached easily from the refuelling container body, and to provide a refuelling container that can limit the generation of frictional refuses caused by friction among members when attaching the coupler to the refuelling container body.

### Means for solving the problem

The present invention relates to a refuelling container for injecting and supplying fuel into a fuel receiving unit of a fuel cell from the outside, the container including a container body provided with a nozzle portion and made of a flexible material, a coupler provided with a valve mechanism connected with a valve of the fuel cell and attached to the nozzle portion, a holder provided with a rising portion covering the periphery of the base portion side of the nozzle portion and receiving the container body and a cylinder member engaged with the coupler and stretched over and installed on the coupler and the side surfaces of the rising portion.

This structure can prevent the coupler from being detached from the refuelling container irrespective of the means for attaching the coupler to the nozzle portion of the container body made of a flexible material.

Also, the refuelling container according to the present invention may have a structure in which the coupler is provided with engaging means for engaging with the fuel receiving unit of the fuel cell.
This structure ensures that the fuel cell can be maintained in the condition that the coupler is bound with the fuel receiving unit of the fuel cell with ease to carry out a continuous fuel injecting operation stably.

Also, the refuelling container of the present invention may have a structure in which the coupler is fitted to the nozzle portion while the opening edge of the nozzle portion is inserted into between an outer peripheral cylinder portion and inner peripheral cylinder portion formed on the coupler.
In this case, the cylinder member is preferably provided with a coupler turn-stopper means. With this structure, it is possible to prevent the coupler from turning when the coupler is bound with the fuel receiving unit of the fuel cell. This is particularly effective when a twist lock mechanism is adopted as engaging means for engaging with the fuel receiving unit of the fuel cell.

Also, the refuelling container of the present invention may have a structure in which the coupler is bound with the outer peripheral surface of the nozzle portion by a screw while the opening edge of the nozzle portion is inserted into between an outer peripheral cylinder portion and inner peripheral cylinder portion formed on the coupler.
In this case, the refuelling container preferably has a structure in which engaging means for engaging with the fuel receiving unit of the fuel cell which means is formed as a separate body from the coupler is bound with the coupler which bounds with said nozzle portion by a screw. With this structure, the relative positional relation of the refuelling container to the fuel cell is fixed when coupling the coupler with the fuel receiving unit of the fuel cell so that the fuel-injecting operation can be always carried out in the best posture.

The present invention also relates to a refuelling container for injecting and supplying fuel into a fuel receiving unit of a fuel cell from the outside, the container including a container body provided with a nozzle portion and a coupler provided with a valve mechanism connected with a valve of the fuel cell, the coupler being secured to the nozzle portion by a caulking member.

In such a structure, the coupler is secured to the nozzle portion of the container body in such a manner that it is pressed against the nozzle portion by the caulking member and it is therefore possible to prevent the coupler from being detached easily from the container body.

Also, the refuelling container according to the present invention may have a structure in which the container body made of a flexible material is received in a holder made of a rigid body.
Such a structure remarkably improves the portability of the refuelling container and can prevent the container body from being ruptured by, for example, mischievous handling.

Also, the refuelling container according to the present invention may have a structure in which the caulking member is stretched over and secured to the coupler and the nozzle portion.
In this case, the refuelling container may have a structure in which a rising portion covering the periphery of the base portion side of the nozzle portion is formed on the holder and a cylinder member provided with a cap attaching means is installed on the rising portion. This ensures that unlike the case of attaching a cap directly to the container body made of a flexible material, it is effectively avoidable that some disorders arise when the cap is attached and the cap falls away.

Also, the refuelling container according to the present invention may have a structure in which a rising portion covering the periphery of the nozzle portion is formed on the holder and the caulking member is stretched over and secured to the coupler and the rising portion.
With such a structure, the coupler can be tightly secured to the nozzle portion more exactly, because the caulking member is secured to the rising portion of the holder made of a rigid material.

Also, the refuelling container according to the present invention may have a structure in which the coupler is provided with engaging means for engaging with the fuel receiving unit of the fuel cell.
This structure ensures that the fuel cell can be maintained in the condition that the coupler is bound with the fuel receiving unit of the fuel cell with ease to carry out a continuous fuel injecting operation stably.

The present invention relates to a refuelling container for injecting and supplying fuel into a fuel receiving unit of a fuel cell from the outside, the refuelling container including a coupler mounted on a nozzle portion of a container body, the coupler being provided with a valve mechanism connected with a valve of the fuel cell and secured to the opening edge of the nozzle portion by a cylinder member which is to be engaged with the coupler.

Such a structure enables the coupler to be tightly secured to the opening edge of the nozzle portion by the cylinder member while keeping the condition that the coupler is mounted on the nozzle portion. Generation of frictional powdery refuses resulting from friction among members can be limited, thereby efficiently preventing these frictional refuses from being mixed in the fuel filled in the refuelling container.

Also, the refuelling container according to the present invention may have a structure in which the container body made of a flexible material is received in a holder made of a rigid body and formed with a rising portion covering the periphery of the base portion of the nozzle portion.
Such a structure remarkably improves the portability of the refuelling container and can prevent the container body from being ruptured by, for example, mischievous handling.

Also, the refuelling container according to the present invention may have a structure in which the cylinder member is bound with the nozzle portion or the rising portion by a screw and a cylinder member turn-stopper means is formed on the rising portion.
With this structure, it is possible to exactly prevent the coupler from being detached from the refuelling container, to thereby prevent the fuel from being refilled.

Also, the refuelling container according to the present invention may have a structure in which the cylinder member is stretched over and installed on the coupler and the side surface of the rising portion.
Such a structure ensures that since the cylinder member is installed on the rising portion formed in the holder made of a rigid body to thereby enable the coupler to be tightly secured to the opening edge of the nozzle portion more exactly.

Also, the refuelling container according to the present invention may have a structure in which positioning means for positioning the container body with respect to the holder is provided on each of the inner peripheral surface of the rising portion and the outer peripheral surface of the nozzle portion facing the inner surface.
This structure allows the container body to be positioned at positions closer to the positions where the coupler or the cylinder member are installed, making possible to improve the assembling accuracy of each member and to thereby more improve the adhesion (sealing ability) between the opening edge of the nozzle portion and the coupler.

Also, the refuelling container according to the present invention may have a structure in which a turn-stopper means of preventing the coupler from being turned with respect to the nozzle portion.
Such a structure enables the coupler to be prevented from being turned with respect to the nozzle portion without fail to thereby prevent generation of frictional powdery refuses when the cylinder member is engaged with the coupler. Also, this prevents the coupler from being turned and the position of the coupler to be attached can be positioned when the coupler is bound with the fuel receiving unit of the fuel cell.

Also, the refuelling container according to the present invention may have a structure in which the coupler is provided with engaging means for engaging with the fuel receiving unit of the fuel cell.
This structure ensures that the fuel cell can be maintained in the condition that the coupler is bound with the fuel receiving unit of the fuel cell with ease to carry out a continuous fuel injecting operation stably.

According to the present invention, it is possible to prevent the coupler from being easily uncoupled. Also, when the coupler is tightly secured to the opening edge by the cylinder member engaged with the coupler while the coupler is mounted on the nozzle portion, generation of frictional powdery refuses resulting from friction among members can be limited, thereby efficiently preventing these frictional refuses from being mixed in the fuel filled in the refuelling container.

### Brief description of the Invention

Fig. 1 is an explanatory view showing the outline of a first embodiment of a refuelling container according the present invention.
Fig. 2 is a sectional view along the line B-B in Fig. 1(b).
Fig. 3 is an explanatory view conceptually showing one example of a valve mechanism used to couple a refuelling container with a fuel receiving unit.
Fig. 4 is an explanatory view conceptually showing the situation where the fuel injection port of a refuelling container is fitted with the fuel ejection port of a fuel receiving unit.
Fig. 5 is an explosion view of a first embodiment of a refuelling container according to the present invention.
Figs. 6 are a sectional view of a main part along with the line F-F and a sectional view of a main part along with the line G-G.
Figs. 7 are a sectional view of a main part along with the line H-H and a sectional view of a main part along with the line I-I.
Fig. 8 is an explanatory view showing the action of a lever in a fuel injecting operation.
Fig. 9 is an explanatory view showing the condition of attachment of a lever as viewed from the inside of a surface member.
Fig. 10 is an explanatory view showing an examples of a modification of a first embodiment of a refuelling container according to the present invention.
Figs. 11 are sectional views along the lines C-C, D-D and E-E of Fig. 2.
Fig. 12 is an explanatory view showing one example of an outer cap constituting a cap.
Fig. 13 is an explanatory view showing one example of an inner cap constituting a cap.
Fig. 14 is an explanatory view showing the action when an outer cap is made to run idle with respect to an inner cap.
Fig. 15 is an explanatory view showing the action when a cap is fastened.
Fig. 16 is a sectional view of a main part showing the outline of a second embodiment of a refuelling container according to the present invention.
Fig. 17 is an explanatory view showing the outline of a third embodiment of a refuelling container according to the present invention.
Fig. 18 is a sectional view along the line L-L of Fig. 17(b).
Fig. 19 is an explanatory view conceptually showing one example of a valve mechanism for coupling a refuelling container with a fuel receiving unit.
Fig. 20 is an explanatory view conceptually showing the situation where a fuel ejection port of a refuelling container is fitted with the fuel injection port of a fuel receiving unit.
Fig. 21 is an explosion view of a third embodiment of a refuelling container according to the present invention.
Fig. 22 is an explanatory view showing the action of a lever in a fuel injecting operation.
Fig. 23 is an explanatory view showing the condition of attachment of a lever in a fuel injecting operation as viewed from the inside of a surface member.
Fig. 24 is a sectional view of a main part showing the outline of a fourth embodiment of a refuelling container according to the present invention.
Fig. 25 is a sectional view of a main part showing the outline of a fifth embodiment of a refuelling container according to the present invention.
Fig. 26 is an explanatory view showing one example of a coupler turn-stopper means.
Fig. 27 is an explanatory view showing another example of a coupler turn-stopper means.
Fig. 28 is an explanatory view showing the outline of a sixth embodiment of a refuelling container according to the present invention.
Fig. 29 is a sectional view along the line M-M of Fig. 28(b).
Fig. 30 is an explanatory view showing one example of a turn-stopper means for preventing a coupler from being turned in a sixth embodiment of a refuelling container according to the present invention.
Fig. 31 are sectional views of a main part along the lines O-O and P-P of Fig. 30.
Fig. 32 is an explanatory view conceptually showing one example of a valve mechanism for coupling a refuelling container with a fuel receiving unit.
Fig. 33 is an explanatory view conceptually showing the situation where a fuel ejection port of a refuelling container is fitted with the fuel injection port of a fuel receiving unit.
Fig. 34 is an explosion view of a sixth embodiment of a refuelling container according to the present invention.
Fig. 35 is an explanatory view showing the action of a lever in a fuel injecting operation.
Fig. 36 is an explanatory view showing the condition of attachment of a lever as viewed from the inside of a surface member.
Fig. 37 is a sectional view of a main part along the line N-N of Fig. 29.
Fig. 38 is a sectional view of a main part showing the outline of a seventh embodiment of a refuelling container according to the present invention.
Fig. 39 is an explanatory view showing one example of a turn-stopper means for preventing a coupler from being turned in a seventh embodiment of a refuelling container according to the present invention.
Fig. 40 is sectional views of a main part along the lines Q-Q and R-R of Fig. 39.

### Best Mode for Carrying out the Invention

Preferred embodiments of the present invention will be explained with reference to the drawings.

### (First embodiment)

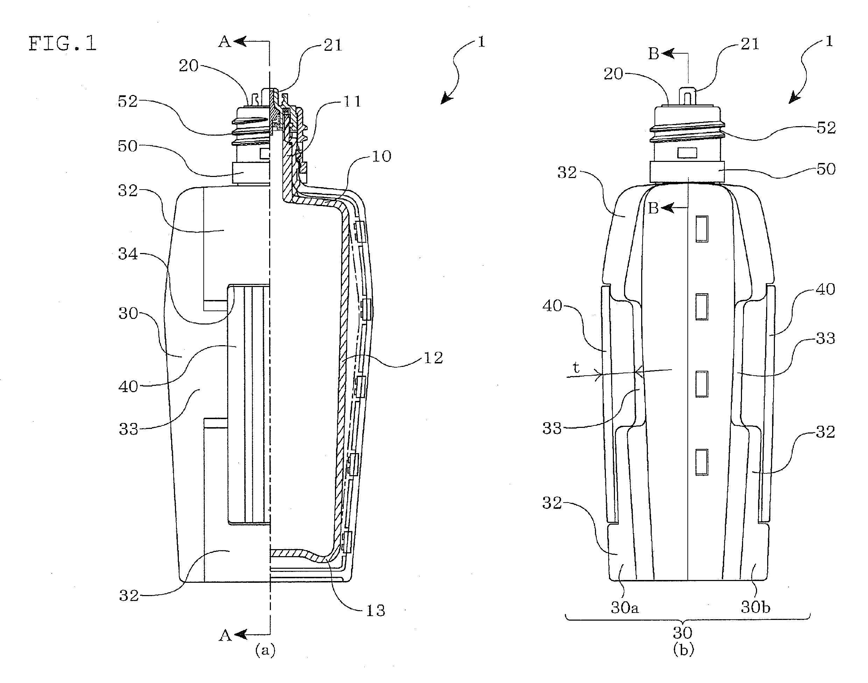

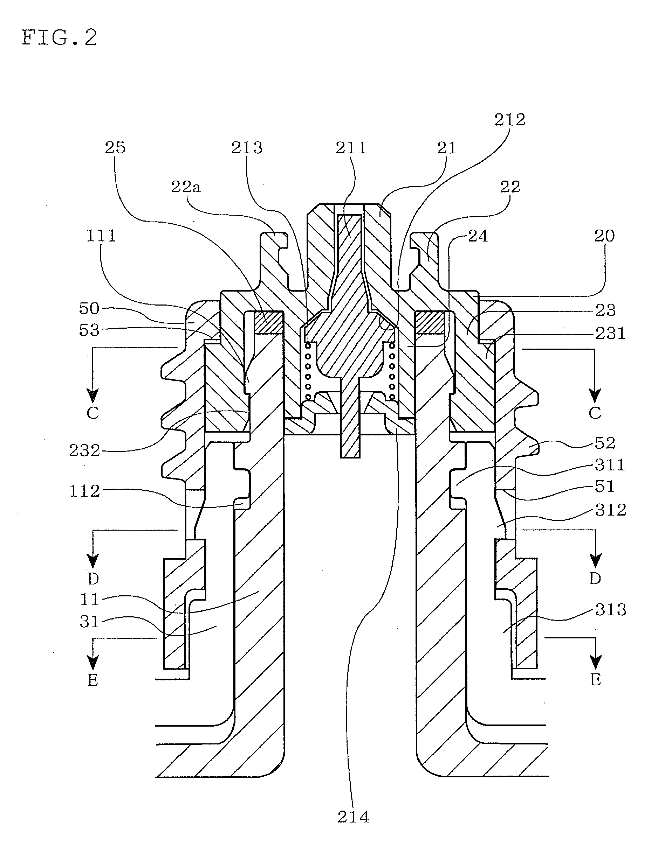

First, a first embodiment of a refuelling container according to the present invention will be explained.
Here, Fig. 1(a) is a partially broken front view showing the outline of this embodiment and Fig. 1(b) is a schematic side view of this embodiment. Also, Fig. 2 is a sectional view along the line B-B of Fig. 1(b).

A refuelling container 1 of this embodiment is provided with a container body 10 having a nozzle portion 11, a body portion 12 and a bottom portion 13.
In this embodiment, the container body 10 is so devised that fuel such as methanol, which is filled in the inside thereof is injected in a predetermined amount into a fuel receiving unit of a fuel cell by reducing its volume and then, the volume is restored by sucking the atmospheric gas contained in the fuel receiving unit and these operations are repeated, thereby carrying out continuous fuel injecting operations.

The container body 10 like this may be obtained by using a flexible material enabling the reduction of the volume in the fuel injecting operation and restore of the volume with ease among synthetic resin materials such as olefin type resins such as high-density polyethylene (HDPE), low-density polyethylene (LDPE), straight-chain low-density polyethylene (LLDPE), polypropylene (PP) and cyclic olefins (COC), their copolymers or blend resins, polyester type resins such as polyethylene terephthalate (PET), polyethylene naphthalate (PEN) and polylactic acid (PLA) and their copolymers or blend resins and by molding the obtained material into a predetermined shape by a appropriate means such as direct blow molding or biaxial stretching blow molding. However, it is preferable to use a transparent material, so that the residual amount of fuel in the container body 10 can be viewed visually.

The container body 10 molded using such a synthetic resin material is not limited to a monolayer structure but may have a multilayer structure. When the container body 10 is designed to have a multilayer structure, at least the innermost layer is preferably formed using the aforementioned synthetic resin material. Also, as intermediate layers, layers of resins (for example, cyclic olefins and polyamide type resins) having a barrier function against fuel, functional resin layers formed of, for example, adhesive resins or regrind layers may be formed.

Also, in the illustrated example, a nozzle portion 11 of the container body 10 is provided with a coupler 20 formed with a projected fuel ejection port 21 and provided with a valve mechanism bound with a fuel cell side valve. This coupler 20 is so devised that the opening edge of the nozzle portion 11 is inserted, together with a seal member 25, into between an outer peripheral cylinder portion 23 hung downward from the outer peripheral edge and an inner peripheral cylinder portion communicated with the fuel ejection port 21 and provided with a valve mechanism on the inner peripheral side.
Then, the coupler 20 is fitted with the nozzle portion 11 in such a manner that it sandwiches the opening edge of the nozzle portion 11 by fitting an fitting projection 111 formed on the upper end side of the outer peripheral surface of the nozzle portion 11 with an fitting projection 232 formed on the lower end side of the inner peripheral surface of the outer peripheral cylinder portion 23 of the coupler 20.

Here, the seal member 25 may be formed using a material such as thermoplastic elastomers, rubbers, foam sheets.
Examples of the thermoplastic elastomers may include styrene/butadiene/styrene block copolymers, epoxidized styrene type elastomers, styrene/isoprene/styrene block copolymers, hydrogenated styrene block copolymers, hydrogenated SBC compounds, simple blend type olefin type elastomers, crosslinking type elastomers, vinyl chloride type elastomers, chlorinated ethylene copolymer crosslinked alloys, chlorinated polyethylene type elastomers, syndiotactic 1,2-polybutadiene, urethane type elastomers, polyester type elastomers, polyamide type elastomers, fluorine type elastomers and silicone type elastomers.
Also, examples of the rubbers (based on ASTM rubber classification) may include 1) rubbers having a polyethylene type saturated main chain, for example, ethylene/propylene/diene ternary copolymers, ethylene/propylene copolymers, completely hydrogenated acrylonitrile/butadiene rubbers, fluororubbers, completely hydrogenated styrene/butadiene rubbers and completely hydrogenated styrene/isoprene rubbers, 2) rubbers having oxygen on the main chain, for example, epichlorohydrin rubbers, 3) rubbers having silicon and oxygen on the main chain, for example, vinylmethylsilicone rubbers, 4) rubbers having an unsaturated carbon bond on the main chain such as natural rubbers and diene type rubbers, for example, a butadiene rubber, chloroprene rubber, hydrogenated acrylonitrile/butadiene rubber, acrylonitrile/butadiene rubber, isobutene/isoprene rubber, natural rubber, hydrogenated styrene/butadiene rubber, styrene/butadiene rubber, hydrogenated styrene/isoprene rubber and styrene/isoprene rubber, 5) rubbers having carbon, oxygen and nitrogen on the main chain, for example, polyether urethane, 6) rubbers having no oxygen or no phosphorous but nitrogen, 7) rubbers having sulfur on the main chain, for example, a polysulfide rubber and 8) rubbers having phosphorous and nitrogen on the main chain, for example, a phosphazene rubber.
Also, as the foam sheets, foamed polyethylene is preferably used, and according to the need, laminates of films made of a polyester type resin such as polyethylene type terephthalate or polyolefin resins such as polyethylene or polypropylene may be used.

In this embodiment, no particular limitation is imposed on the valve mechanism that the coupler 20 has. For example, as is illustrated, the valve mechanism may be constituted by inserting a valve body 211 on the inner peripheral side of the inner cylinder portion 241, and a spring 213 that forces the valve 211 to move toward a valve seat 212 so as to close the fuel ejection port by the valve body 211 and binding a spring bearing 214 with the lower end of the inner cylinder portion 241.

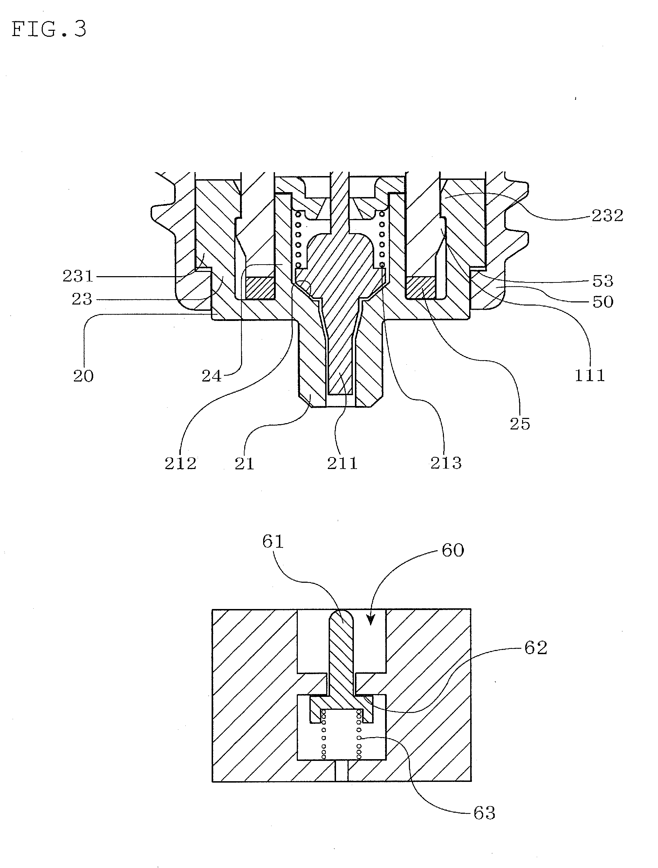

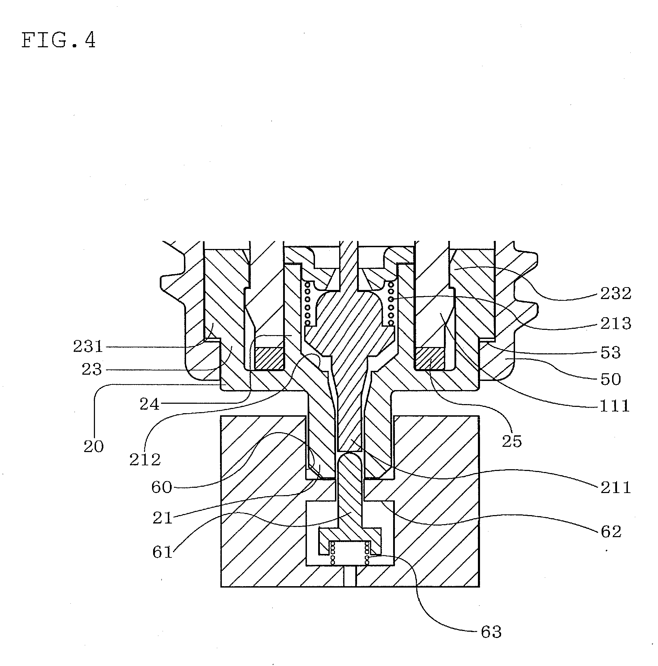

Fig. 3 is an explanatory view conceptually showing one example of a valve mechanism used to couple the fuel ejection port 21 of the coupler 20 attached to the container body 10 with the fuel injection port 60 disposed in the fuel receiving unit of the fuel cell while keeping airtight condition between the container and the fuel receiving unit of the fuel cell, indicating the schematic section of the valve mechanism of the coupler 20 and the schematic section of the valve mechanism formed at the fuel injection port 60 of the fuel cell. Fig. 4 shows the situation where the fuel ejection port 21 of the coupler 20 is inserted into and fitted with the fuel injection port 60.

In the illustrated example, when the fuel ejection port 21 of the coupler 20 is inserted into the fuel injection port 60, the valve body 211 of the valve mechanism of the coupler 20 and the valve body 61 of the valve mechanism formed on the fuel injection port 60 of the fuel cell are brought into contact with each other and pressed against each other. Generally, the energizing force of the spring 61 energizing the valve body 61 of the fuel injection port 60 is designed to be lower than the energizing force of the spring 212 energizing the valve body 211 and therefore, the valve body 61 of the fuel injection port 60 first leaves the valve seat 62 to open the valve mechanism of the fuel injection port 60. At this time, an adequate seal member (not shown) is interposed between the fuel ejection port 21 of the coupler 20 and the fuel injection port 60 disposed in the fuel receiving unit so that the both are tightly fitted with each other, whereby the airtight condition in the fuel receiving unit can be maintained.

Then, when the fuel ejection port 21 of the coupler 20 is further pushed into the fuel injection port 60, the valve body 211 of the fuel ejection port 21 leaves the valve seat 212 to thereby open the valve mechanism of the fuel ejection port 21. This leads to the result that the fuel receiving unit of the fuel cell is communicated with the container body 10 while keeping the airtight condition, and therefore, fuel in the container body 10 can be injected into and supplied to the fuel receiving unit of the fuel cell from the outside by carrying out the fuel injecting operation as mentioned above.

At this time, the coupler 20 may be provided with an engaging projection 22 as shown in Fig. 2 as engaging means for engaging with the fuel receiving unit of the fuel cell to thereby carry out continuous fuel injecting operations stably while easily keeping the condition that the coupler is coupled with the fuel receiving unit of the fuel cell. The illustrated engaging projection 22 adopts a twist lock mechanism in which an engaging portion 22a of its end is inserted into a receiving hole provided on the fuel receiving unit side, then the refuelling container 1 and all are turned to engage the engaging portion 22a with the receiving hole of the fuel receiving unit.

It is to be noted that in Figs. 3 and 4, illustrations of the engaging projection 22 and the receiving hole are not shown for the sake of drawing figures. The engaging projection 22 is not limited to the aspect in which it is integrated with the coupler 20 but may be formed separately from the coupler 20 in such a manner that after the coupler 20 is tightly secured to the nozzle portion 11, the positioning of the engaging projection 22 is made and then it is coupled with the coupler 20. Also, such twist lock mechanism is an example and the engaging means for engaging with the fuel receiving unit of the fuel cell may be one utilizing only concave-convex fitting between the engaging projection 22 and the receiving hole formed on the fuel receiving unit side.

Also, the refuelling container of this embodiment is received in a holder 30 made of a rigid material taking its portability into account. This effectively avoids such disorders that when this container is put into a bag or the like to carry it, it is squeezed in the bag, resulting in fuel leakage, thereby improving safety during carrying.
Specifically, in this embodiment, the container body 10 is formed of a flexible material so as to make it easy to reduce and restore the volume in the fuel injecting operation. When this container body 10 is received in the holder 30, the portability can be remarkably improved and also, the container body 10 is prevented from being ruptured by, for example, mischievous handling.

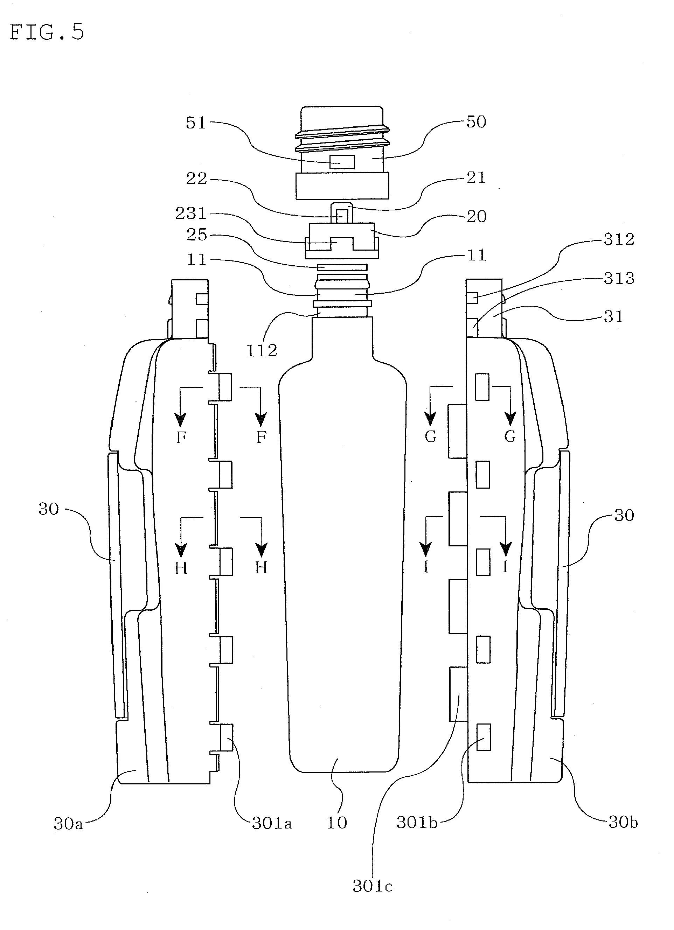

In this embodiment, the holder 30 is constituted of a surface member 30a and a backface member 30b divided in a longitudinal direction. Then, as shown in Fig. 5, an engaging claw 301a formed on the surface member 30a is engaged with an fitting hole 301b formed on the backface member 30b to receive the container body 10 between the integrated surface member 30a and backface member 30b. At this time, as is illustrated, a projected strip 301c to be inserted into between neighboring engaging claws 301a formed on the surface member 30a is formed on the backface member 30b to thereby deform the surface member 30a, thereby making it possible to prevent the surface member 30a from being uncoupled from the backface member 30b easily against the force uncoupling the engagement between the engaging claw 301a and the engaging hole 301b.

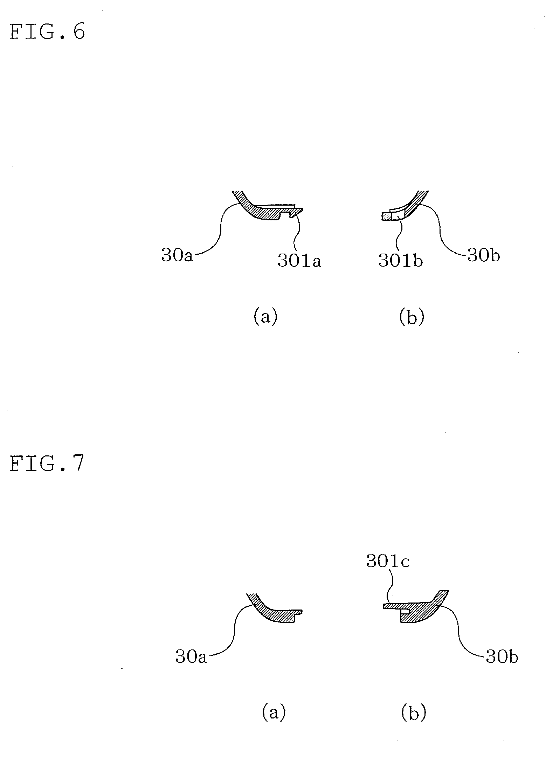

Here, Fig. 5 is an explosion view of the refuelling container 1, Fig. 6(a) is a sectional view of a main part along the line F-F of Fig. 5 and Fig. 6(b) is a sectional view of a main part along the line G-G in Fig. 5 and Fig. 7(a) is a sectional view of a main part along the line H-H of Fig. 5 and Fig. 7(b) is a sectional view of a main part along the line I-I in Fig. 5.

When methanol or the like is filled as the fuel in the container body 10, it is required to prevent the holder 30 and container body 10 from being uncoupled from each other with ease. It is also possible to prevent the surface member 30a from being uncoupled from the backface member 30b with ease by disposing the engaging claw 301a and the fitting hole 301b alternately on each of the surface member 30a and the backface member 30b to engage the both with each other, or by binding the surface member 30a with the backface member 30b by adhesion or fusion.

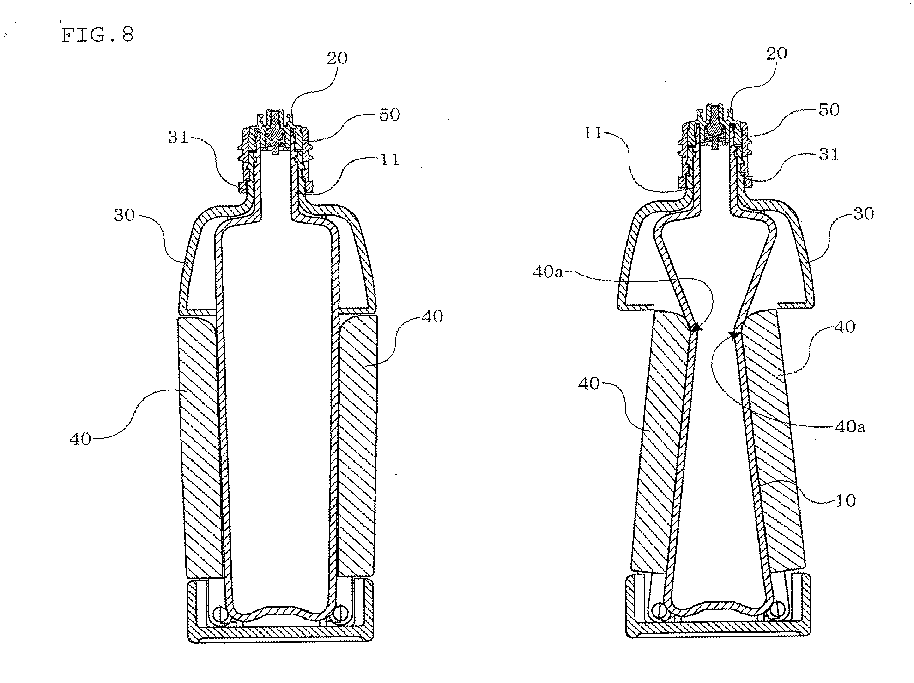

The surface member 30a and backface member 30b constituting the holder 30 are respectively provided with an opening portion 34 in almost the center thereof and a lever 40 is installed so as to be turned toward the inside of each of these members 30a and 30b on the axis of the lower end is attached to the opening portion 34. The lever 40 attached in this manner functions as an operating unit to carry out a fuel injecting operation as mentioned above wherein when the lever 40 is pressed down by the turning operation, the working portion 30a of the lever 40 is brought into contact with the container body 10 to thereby reduce the volume of the container body 10 by a volume corresponding to the shift of the lever 40 (see Fig. 8).

Here, Fig. 8 corresponds to the A-A section of Fig 1(a), Fig. 8(a) shows the situation where the lever 40 is placed at a regular position and Fig. 8(b) shows the situation where the lever 40 is pressed down. As shown in Fig. 8(b), when the lever 40 is pressed down, the working portion 40a of the lever 40 is pressed against the container body 10 and the container body 10 is elastically deformed. In this case, the container body 10 is elastically deformed not only in the direction in which the lever 40 is pressed down but also in the direction perpendicular to the pressed-down direction as shown by the dotted line in Fig. 1(a). Therefore, the inner dimension of the holder 30 is preferably designed in consideration of the elastic deformation of the container body 1 in such directions.

More specifically, it is preferable that after a reduction in the volume of the container body 10 is optimized to find a variation of the container body 10 (generally, the container body 10 is deformed in the direction perpendicular to the direction in which the lever is pressed down) in the operation of injecting the fuel corresponding to the optimized reduction in volume, the inner dimension of the holder 30 be designed so as to have a margin enough to be able to offset the variation of the container body 10.

Also, when the container body 10 is received in the holder 30, it is preferable that the horizontal section of the body portion 12 of the container body 10 have an elliptic form and the lever 40 be made to face the surface along the direction of the major diameter of the body portion to receive the container body 10 in the holder 30.

Such a structure ensures that when the container body 10 is molded by the means mentioned above, the surface of the body portion 12 along the major diameter of the body portion 12 of the container body 10 is more stretched and made to have a smaller wall thickness than the surface along the minor diameter in the molding. Therefore, if pressure is applied to this surface along the major diameter by the working portion 40a of the lever 40 to elastically deform the container body 10, the volume of the container body 10 is easily reduced and it is possible to control the reduction in volume with ease.

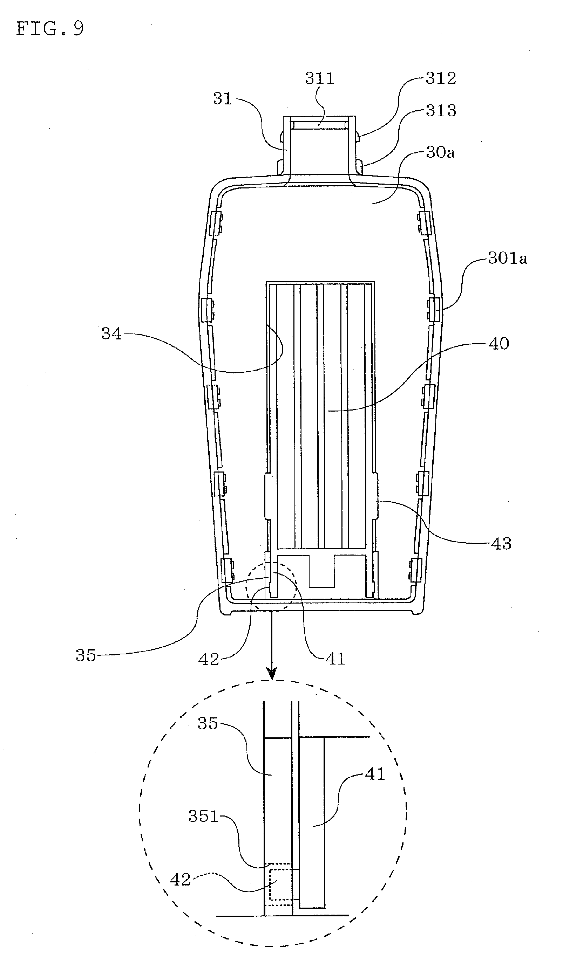

Also, as shown in Fig. 9 illustrating the condition of attachment of a lever as viewed from the inside of a surface member 30a, the lever 40 in this embodiment is provided with an arm 41 extending to the lower end side. As shown by the enlarged part enclosed by the dotted line in the figure, a projection 42 provided on the top side of the arm 41 is made to penetrate through drilled hole 351 of the projected strip 35 formed on the surface member 30a in such a manner that the lever 40 is attached so as to be able to be turned with respect to the surface member 30a.

In the illustrated example, the lever 40 is attached in such a manner that its turning axis is positioned at the lower end side. However, the turning axis may be positioned at the upper end side and no particular limitation is imposed on a specific attaching means insofar as the lever 40 functions as a working portion used to carry out the fuel injecting operation.

If the force for pressing down the lever 40 is loosened, its elastic force and the inner pressure in the head space in the container body 10 allows the container body 10 to restore its volume, and the lever 40 is pressed back and returned to its regular position. At this time, when a gap is formed between the working portion 40a side edge of the lever 40 and the opening portion 34, such disorders are considered that foreign substances enter into the gap and the fingers of users operating the lever 40 are caught in the gap when the lever 40 is pressed down again to repeat the fuel injecting operation.

For this reason, the lever 40 is provided with a stopper 43 which is brought into contact with the edge of the opening portion 34 from the inside to thereby limit the turning range of the lever 40 directed to the outside of the surface member 30a so as to prevent the formation of a gap between the working portion 40a side edge of the lever 40 and the opening portion 34, and also to prevent the lever 40 from protruding outside even if the container body 10 is expanded under a high-temperature environment.

Though not particularly illustrated, the lever 40 may also be attached to the backface member 30b in the same manner.

Also, in this embodiment, the surface member 30a and the backface member 30b may be, as illustrated, provided with a elevated portion 32 which partially encloses each side surface of the upper and lower end sides of the lever 40, and is formed in such a manner as to rise up from a standard plane 33 such that it has the same height as the operational plane of the lever 40, on the upper and lower portions of each member. This limits the operational range of the lever 40 to an easily operational part in the center part of the lever 40, to thereby prevent the lever 40 from being pressed down carelessly in the case of carrying the battery in, for example, a bag or in the case of falling the battery down because of mistakes.

Therefore, in the illustrated example, users can carry out fuel injecting operations by pressing down in such a manner as to put the operational plane in the center part of the lever 40 between the thumb and the forefinger.
If the operational range of the lever 40 can be limited to an easily operational part in the center part of the lever 40, the rising portion 10b may be formed in such a manner that it rises so as to protrude from the operational plane of the lever 40.

Also, the holder 30 may be provided with a limiting mechanism that limits a reduction in the volume of the container body 10 to a level not exceeding a fixed value when the lever 40 is pressed down to carry out the fuel injecting operation. Though no particular limitation is imposed on the specific structure of the limiting mechanism, for example, the possible shift of the lever 40 when the lever 40 is pressed down, that is, a difference t between the operational plane of the lever 40 and the standard plane 10a may be properly adjusted to thereby limit a reduction in the volume of the container body 10 to a level not exceeding a fixed value.

The provision of such a limiting mechanism brings about the result that the reduction in the volume of the container body 10 in the fuel injecting operation is fixed to thereby make the fuel injected in a fixed amount into the fuel receiving unit of the fuel cell body. When the pressure in the fuel receiving unit is excessive in the fuel injection operation, there is a fear that an electromotive unit of the fuel cell disposed adjacent to the fuel receiving unit is broken. However, since such a rise in the pressure of the fuel receiving unit is limited while amount of the fuel injected is made fixed, such disorders can be efficiently avoided.

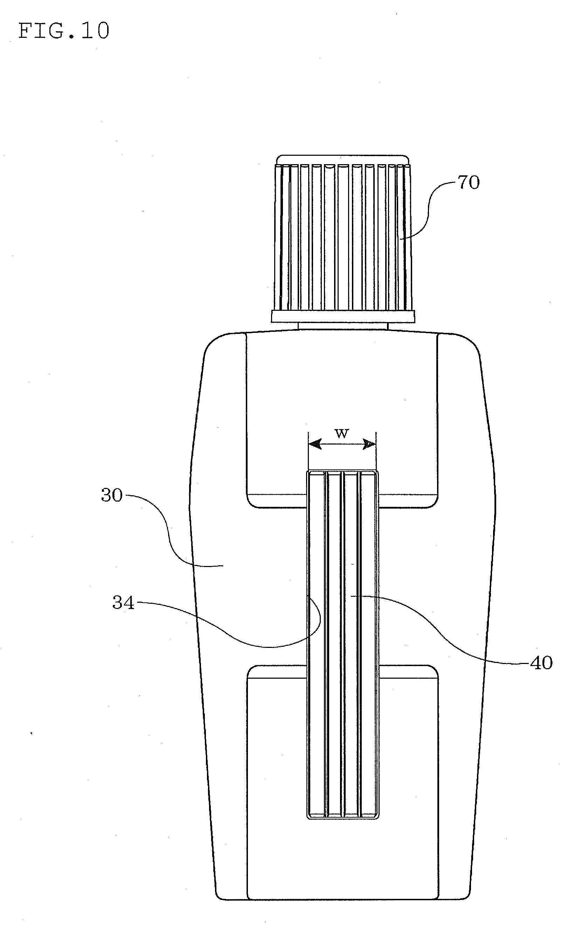

Also, though the lateral width of the lever 40 may be arbitrarily designed, it is preferable to narrow the lateral width W (for example, 13 mm or less) of the lever 40 as shown in Fig. 10, to thereby prevent the lever from being pressed down below the standard plane 10a because the fingers of users touched the standard plane 10a when these fingers pressed down the lever beyond the operational plane of the lever 40. This ensures a fixed reduction in the volume of the container body 10 in the fuel injecting operation more exactly.

Though not particularly illustrated, the lever 40 as the operating unit may be formed on only one surface of the holder 30. Such an aspect has the advantage that the holder 30 can keep a stable posture in the fuel injecting operation and also, the other surface of the holder 30 may be used as a space used to print instructions such as notes before use or to apply instruction prints.

Also, in this embodiment, a rising portion 31 which covers the surrounding of the base portion side of the nozzle portion 11 of the container body 10 and extends to the vicinity of the lower end of the coupler 20 is formed on the holder 30. In the illustrated example, a ring-shape slip-out stopper lib 311 engaged with a slip-out stopper groove 112 formed on the outer peripheral surface of the nozzle portion of the container body 10 is formed on the inner peripheral surface of the rising portion 31.

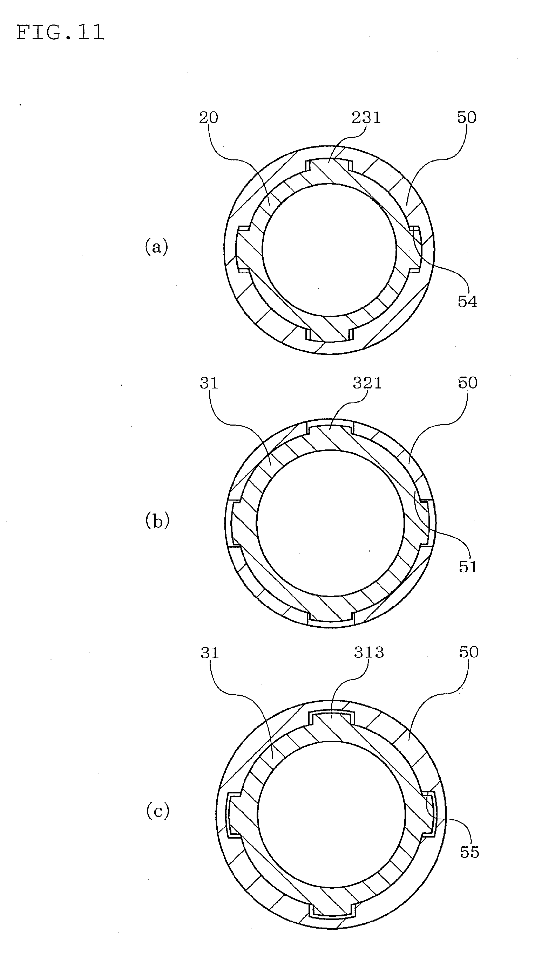

Also, in the illustrated example, plural (four, in the illustrated example) convex stripes 231 extending vertically are provided at equal intervals on the side surface of the coupler 20 (see Fig. 11(a)). A cylinder member 50 is engaged with the coupler 20 when a step portion 53 is brought into contact with the upper surface of the convex stripes 231 (see Fig. 2). Then, a fitting hole 51 is formed by drilling in the cylinder member 50 and a fitting projection 312 formed on the rising portion 31 is fitted into the fitting hole 51, thereby enabling the cylinder member 50 to be installed.

With this structure, the coupler 20 is pressed against the nozzle portion 11 of the container body 10 so that it cannot be uncoupled with ease. This prevents the coupler 20 from being uncoupled from the nozzle portion 11 of the container body 10 carelessly.

In this embodiment as mentioned above, the cylinder member 50 is engaged with the coupler 20 and installed so as to stretch over the side surfaces of the coupler 20 and rising portion 31, thereby making difficult to uncouple the coupler 20. Specific means for installing the cylinder member 50 in this manner is not limited to the illustrated example.

Also, when the cylinder member 50 is installed, the cylinder member 50 is preferably provided with a turn-stopper means 313 preventing the coupler from being relatively turned with respect to the nozzle portion 11 by the concave-convex fitting of grooves 54 and 55 (see Figs. 11(a) and 11(c)) which are formed corresponding to the convex stripe 231 formed on the coupler 20 and the turn-stopper 313 formed on the rising portion 31 as shown in Fig. 11. Particularly, when the foregoing twist lock mechanism is adopted as the engaging means for engaging with the fuel receiving unit, it is effective to provide such a turn-stopper means. However, there is no particular limitation to the specific structure of the turn-stopper means provided on the cylinder member 50 insofar as it functions as a stopper for preventing the coupler 20 from being turned resultantly.

Here, Fig. 11(a) is a sectional view along the line C-C of Fig. 2, Fig. 11(b) is a sectional view along the line D-D of Fig. 2, and Fig. 11(c) is a sectional view along the line E-E of Fig. 2.

Further, in this embodiment, a screw portion 52 is formed as a cap installing means on the outer peripheral surface of the cylinder member 50 so as to be able to install a cap 70 by this screw portion as shown in Fig. 10.
When the screw portion 52 is formed as the cap installing means on the cylinder member 50 constituted as a separate material from the container body 10 made of a flexible material, a hard base material is used for the cylinder member 50 to secure the strength of the screw portion 52 and also, the screw having a sharp shape is formed, whereby the cap 70 can be hardly uncoupled.

Generally, in the case of installing the cap 70 on the container body 10 made of a flexible material, it is difficult to secure the strength of the nozzle portion 11 for binding the cap 70 by screw fastening, bringing about such a phenomenon that the nozzle portion 11 of the container body 10 is deformed, causing screw fastening of the cap 70 to be hindered and the cap 70 to fall down. However, according to this embodiment, such disorders can be efficiently avoided.

The cap installing means is not limited to the formation of the screw portion 52 as is illustrated but such a structure may be adopted in which the cap 70 is fitted with the cylinder member 50.

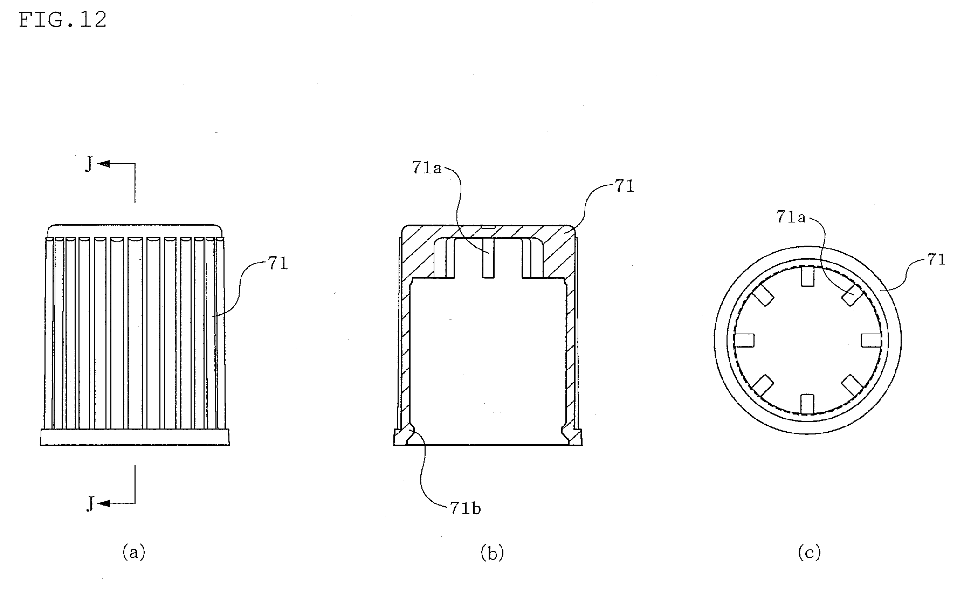

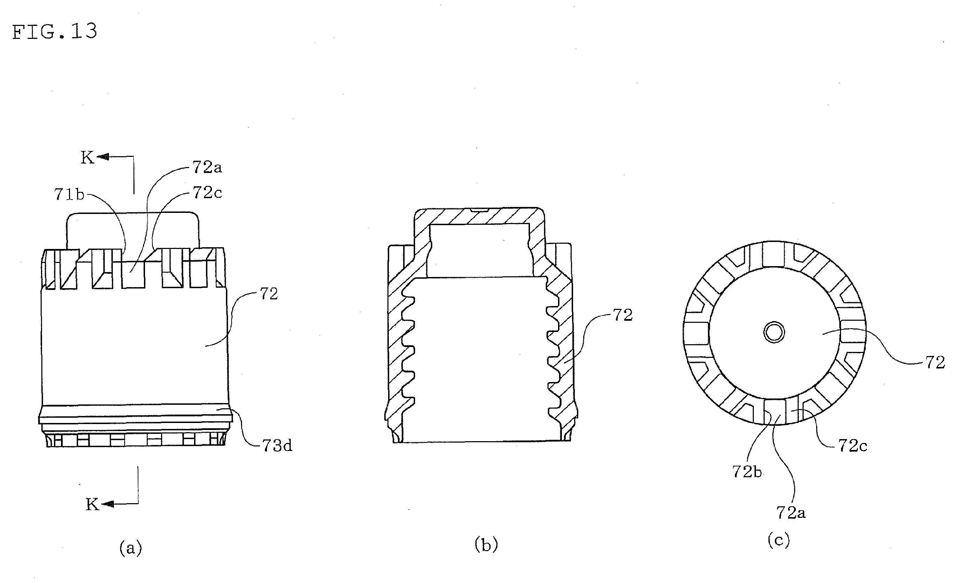

Also, in this embodiment, a cap 70 provided with a child resistance function is preferably used as the cap 70 to be bound to the cylinder member 50 by a screw to prevent, for example, children from uncapping by mistake. Examples of the cap 70 having a child resistance function include those having a double layer structure provided with an outside cap 71 as shown in Fig. 12 and an inside cap 72 as shown in Fig. 13.

Fig. 12 is an explanatory view of the outside cap 71, Fig. 12 (a) is a front view of the outside cap 71, Fig. 12(b) is a sectional view along the line J-J of Fig. 12(a) and Fig. 12(c) is a bottom plan view of the outside cap 71. As shown in these views, plural hanging strips 71a are disposed along the peripheral direction on the inside of the ceiling surface of the outside cap 71.
Also, Fig. 13 is an explanatory view of the inside cap 72, Fig. 13 (a) is a front view of the inside cap 72, Fig. 13(b) is a sectional view along the line K-K of Fig. 13(a) and Fig. 13(c) is a plan view of the inside cap 72. As shown in these views, a thread groove is formed on the inner peripheral surface of the inside cap 72. The cap 70 is screwed to the nozzle portion 11 of the container body 10 by this thread groove. Furthermore, a groove portion 72a sandwiched between a rise surface 72b and a slant surface 72c is formed on the upper surface of the inside cap 72 in such a manner that the hanging strip 71a of the outside cap 71 is inserted into the groove portion 72a of the inside cap 72 when the inside cap 72 is inserted into the outside cap 71.

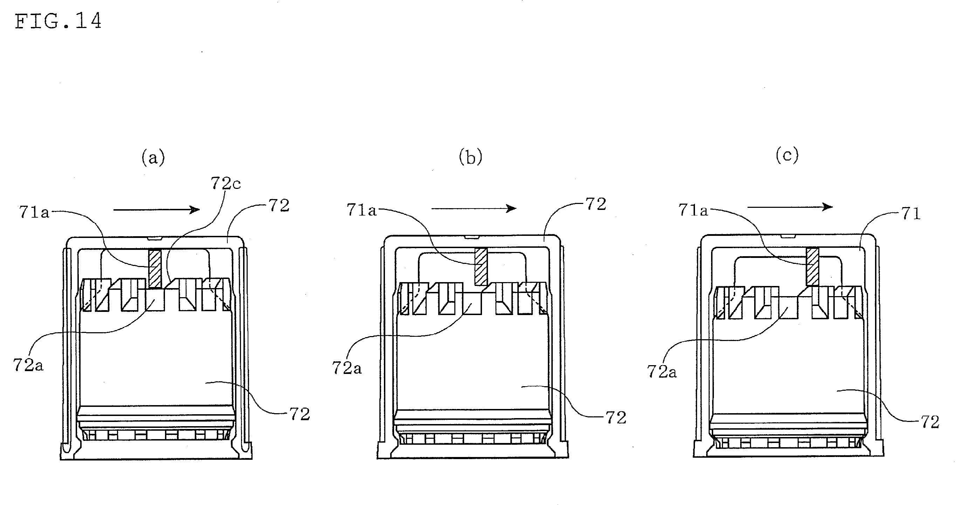

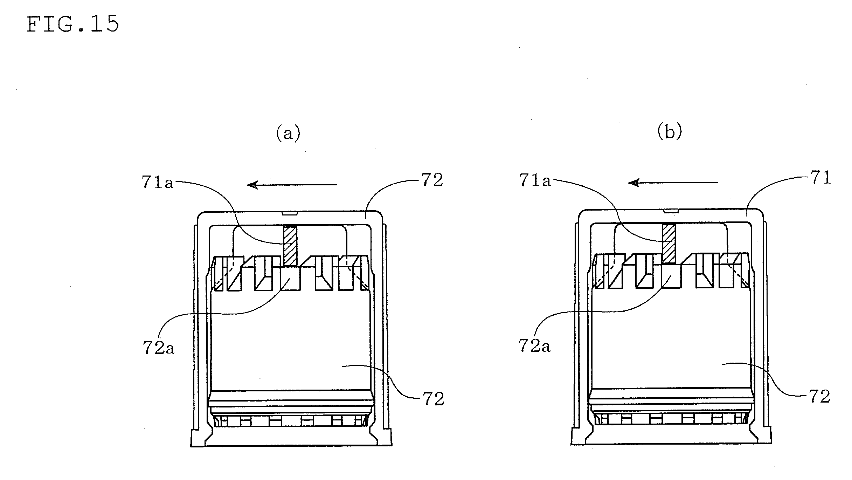

These outside cap 71 and the inside cap 72 are so devised that the inside cap 72 is vertically movable relatively in the outside cap 71 and the inside cap 72 is not easily uncoupled from the outside cap 71 by the slip-out stopper 71b of the outside cap 71 and a filling portion of the inside cap 72. Then, as shown in Fig. 14, both caps are so devised that if the cap 70 is merely turned in the direction of the arrow in the figure with the intention of uncoupling the cap 70 from the nozzle portion 11 of the container body 10, the hanging strip 71a of the outside cap 71 runs onto the slant surface 72c of the inside cap 72 side (see Fig. 14(b)) so that the outside cap 71 runs idle with respect to the inside cap 72 (see Fig. 14(c)).
When the cap 70 is screwed to the nozzle portion 11 of the container body 10 on the contrary, it is so devised that if the outside cap 71 is turned in the direction of the arrow in the figure as shown in Fig. 15, the hanging strip 71a of the outside cap 71 is brought into contact with the rise surface 72b of the inside cap 72 side (see Fig. 15(b)), so that the inside cap 72 is also turned together with the outside cap 71 to thereby fasten the cap 70 with ease.
In Figs. 14 and 15, only one hanging strip 71a to be noticed is illustrated and indicated by the shaded portion.

When the cap 70 is detached from the nozzle portion 11 of the container body 10 on the other hand, it is only necessary to turn the cap 70 while applying force downward to the outside cap 71 so as to prevent the outside cap 71 from running idle with respect to the inside cap 72 in such a manner that the end of the hanging strip 71a of the outside cap 71 is pressed against the slant surface 72c of the inside cap 72. The inside cap 72 is also turned together with the outside cap 71 whereby the cap 70 can be detached from the nozzle portion 11 of the container body 10.

In this embodiment, the surface member 30a, backface member 30b, lever 40 and cap 70 constituting the holder 30 may be produced by using synthetic resin materials such as an acrylonitrile/butadiene/styrene resin (ABS), polystyrene (PS), acrylonitrile/styrene resin (AS), polyethylene terephthalate (PET), polybutylene terephthalate (PBT), polyethylene naphthalate (PEN), polycarbonate (PC), polypropylene (PP), polyethylene (PE), polyacetal (POM), polymethylmethacrylate (PMMA) and modified polyphenylene ether (PPE) either alone or by blending two or more, or by using a complex material obtained by compounding fillers such as a glass fiber or talc in these compounds and by molding into a predetermined form by an injection molding. In this case, it is desirable to mold at least the lever 40 by using a highly transparent material so that the condition of the received container body 10, for example, the amount of fuel left in the container body 10 can be observed visually. Generally, among materials having high resistance to falling impact, a few materials have high transparency. It is therefore particularly preferable to form the lever 40 by using a highly transparent material from the viewpoint of making possible to observe the residual amount of fuel in the container body 10 while securing the falling impact resistance.

### (Second embodiment)

Next, a second embodiment of the refuelling container according to the present invention will be explained.

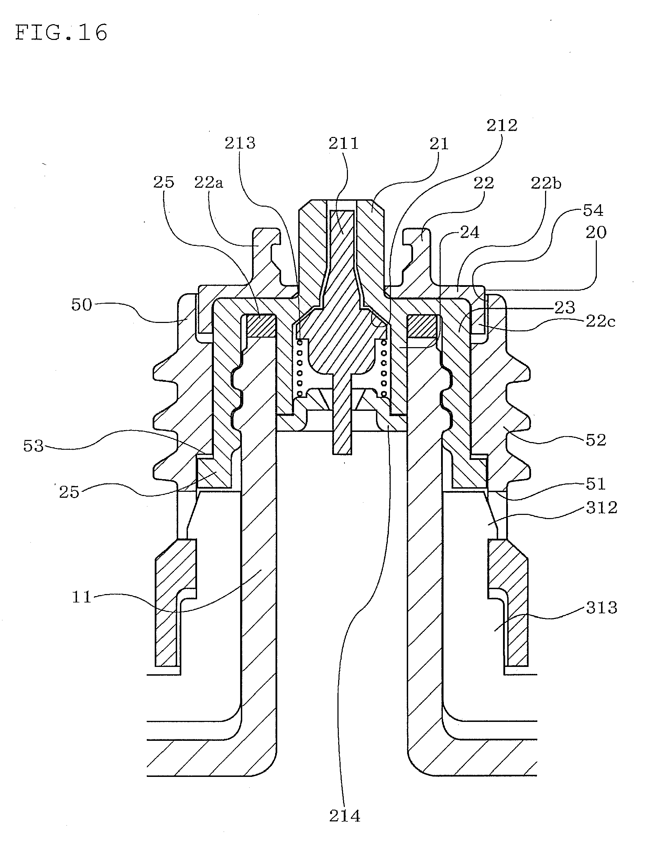

Fig. 16 is a sectional view of a main part showing the outline of the present embodiment and corresponds to the B-B section of Fig. 1(b) in the foregoing first embodiment. This embodiment is regarded as a modification of the foregoing first embodiment.

In the first embodiment mentioned above, the coupler 20 is fitted with the nozzle portion 11. However, the means of directly attaching the coupler 20 with the nozzle portion 11 is not limited to this. In this embodiment, it is so designed that as shown in Fig. 16, the coupler 20 is screwed into the outer peripheral surface of the nozzle portion 11 while inserting the opening edge of the nozzle portion 11 into between the outer peripheral cylinder portion 23 formed on the coupler 20 and the inner peripheral cylinder portion 241.

In this case, if the engaging projection 22 as the engaging means for engaging the coupler 20 with the fuel receiving unit of the fuel cell is integrated with the coupler 20, it is difficult to control the level of thread fastening. Therefore, the magnitudes of thread fastening vary widely from a higher level to a lower level, causing a variation in the position of the engaging projection 22 when the coupler 20 is attached to the nozzle portion 11. For this, when particularly, the coupler 20 is bound with the fuel receiving unit of the fuel cell by a twist lock mechanism, the relative positional relationship between the refuelling container 1 and the fuel cell is not fixed and therefore, the postures of the refuelling containers in the fuel injecting operation differ every refuelling container 1, with the result that the fuel injecting operation cannot be carried out in always most adequate posture.

For this, it is preferable that the engaging projection 22 be formed as a separate body from the coupler 20 and bound with the coupler 20 after the coupler 20 is screwed into the nozzle portion 11 and positioned. In the illustrate example, projected strip 22c hung from the edge of a base portion 22b of the engaging projection 22 is inserted into a positioning groove 54 formed on the cylinder member 50 to position and then the base portion 22b of the engaging projection 22 is bound with the top of the coupler 20 by ultrasonic wave fusion.

This embodiment is different from the foregoing first embodiment in the above points and has the same structure except for this. Therefore, detailed explanations of other structures will not be described here. However, also in this embodiment, the cylinder member 50 is installed in such a manner as to stretched over the coupler 20 and the side surface of the rising portion 31 while engaged with the coupler 20, whereby it is difficult to uncouple the coupler 20. In the illustrated example, a step portion 53 of the cylinder member 50 is engaged with a flange portion 25 formed on the lower end side of the coupler 20.

### (Third embodiment)

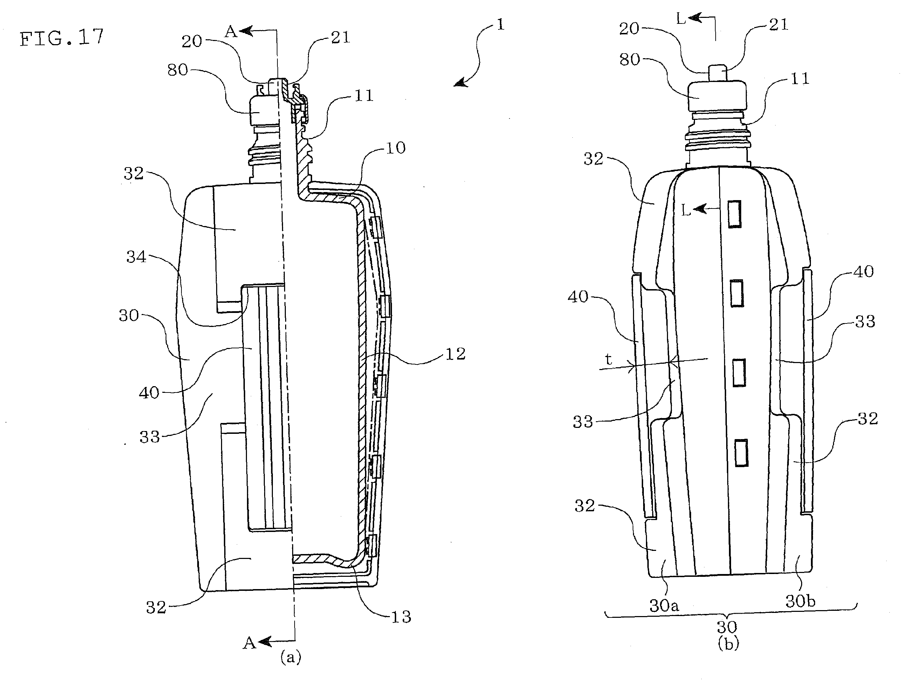

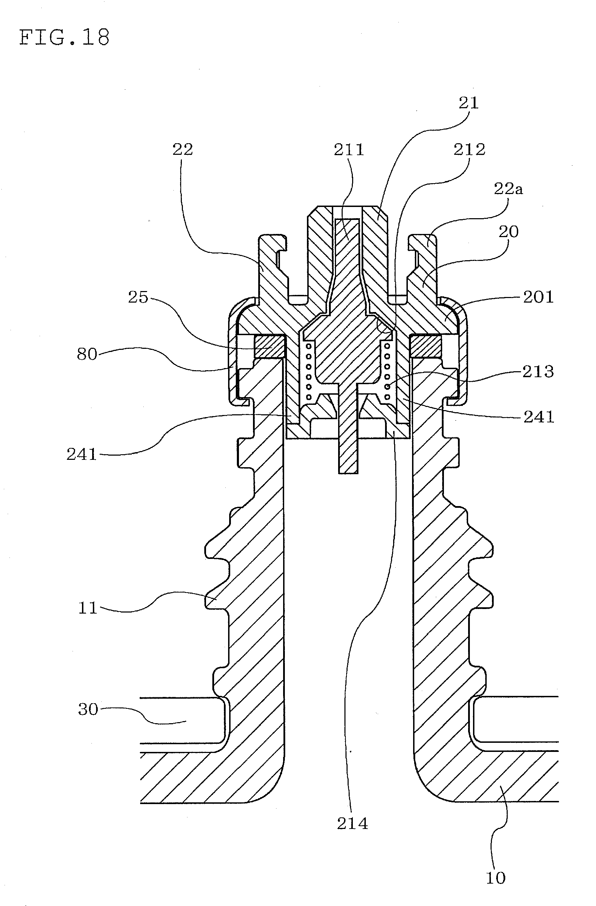

Next, a third embodiment of the refuelling container according to the present invention will be explained.
Here, Fig. 17(a) is a partially broken front view showing the outline of this embodiment, Fig. 17(b) is a schematic side view of this embodiment. Also, Fig. 18 is a view along the line L-L of Fig. 17(b). This embodiment is regarded as a modification of the foregoing first embodiment.

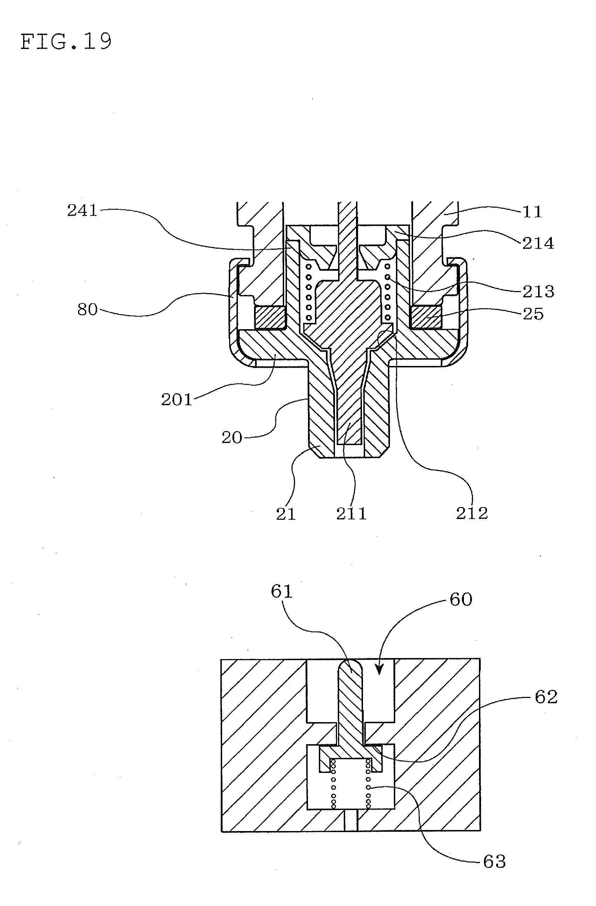

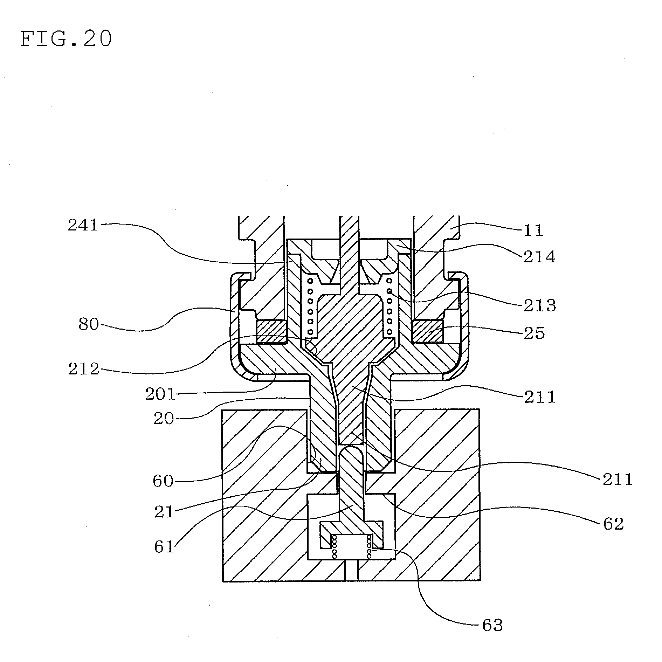

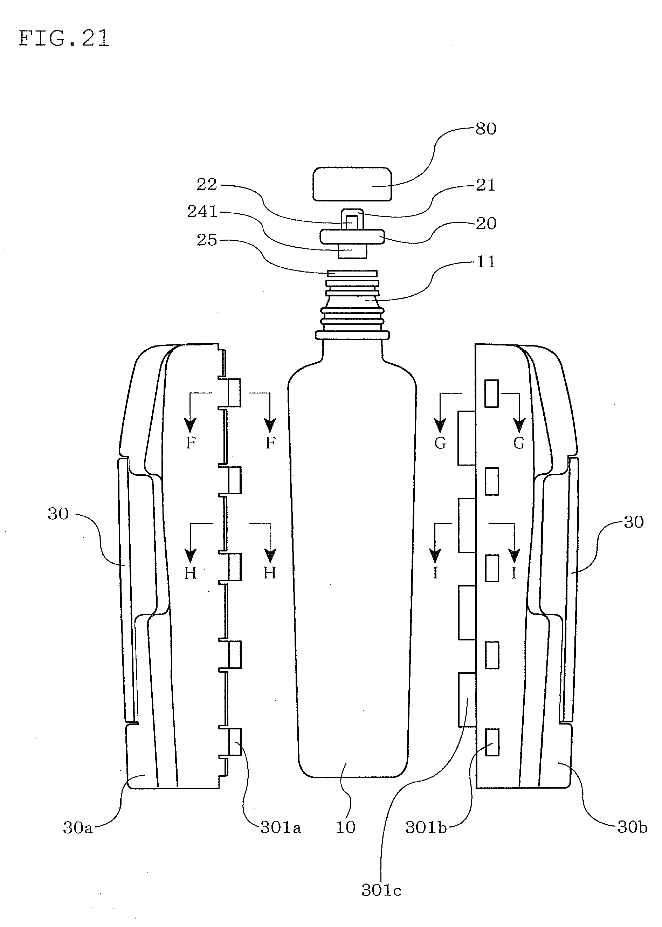

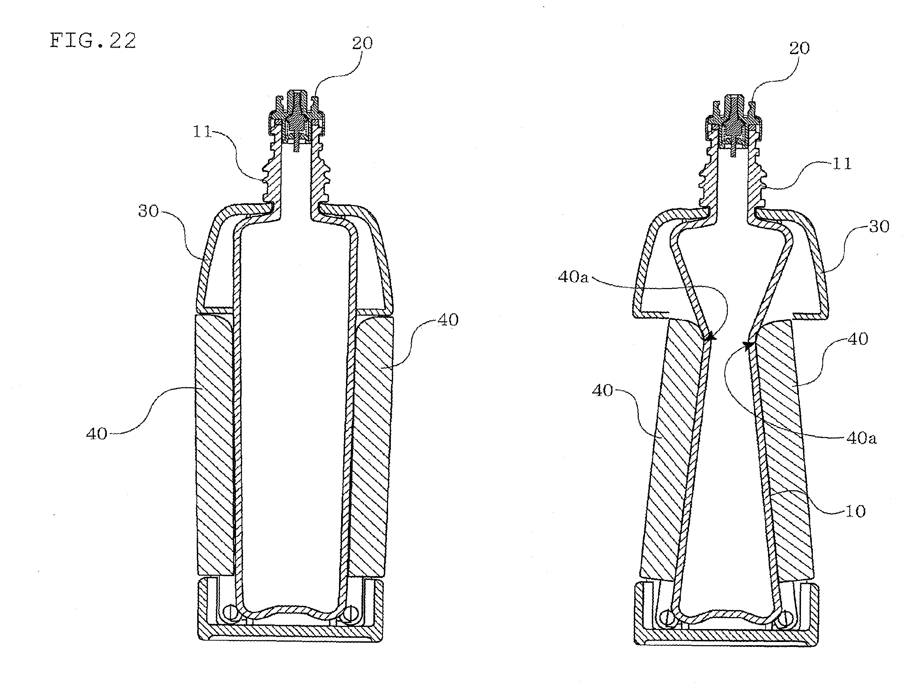

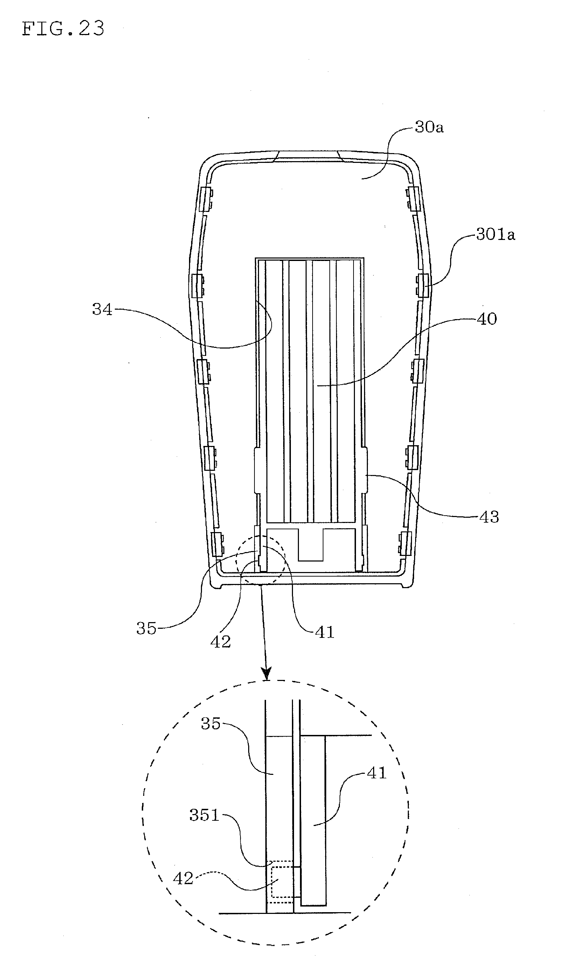

Figs. 19, 20, 21, 22 and 23 are views corresponding to Figs. 3, 4, 5, 8 and 9 shown in the first embodiment respectively to show this embodiment. Also, parts common to these figures are designated by the same symbols and according to the need, will be explained by quoting the explanations of the first embodiment. This is the same in a fourth embodiment and a fifth embodiment which will be explained later.

In this embodiment, the coupler 20 is provided with a cylinder portion 241 which is communicated with the fuel ejection port 21 and provided with a valve mechanism in the inside peripheral side and a ceiling portion 201 hanging over the outer peripheral side of the cylinder portion 241. In the situation where the cylinder portion 241 is inserted into an opening portion of the nozzle portion 11 and a seal member 25 is interposed between the ceiling portion 201 and the edge of the opening of the nozzle portion 11, a caulking member 80 is stretched over and secured to the coupler 20 and the nozzle portion 11, thereby tightly securing the coupler 20 to the nozzle portion 11.
With this structure, it is so devised that the coupler 20 is pressed against the nozzle portion 11 of the container body 10 so that it cannot be uncoupled with ease to thereby prevent the coupler 20 from being detached from the container body 10 carelessly.

Also, in this embodiment, a cap 70 is attached to the nozzle portion 11 of the container body 10. As this cap 70, the same one that is used in the foregoing first embodiment may be used.

This embodiment is different from the foregoing first embodiment in this point, and has the same structure except for this. Therefore, detailed explanations of other structures will not be described here.

### (Fourth embodiment)

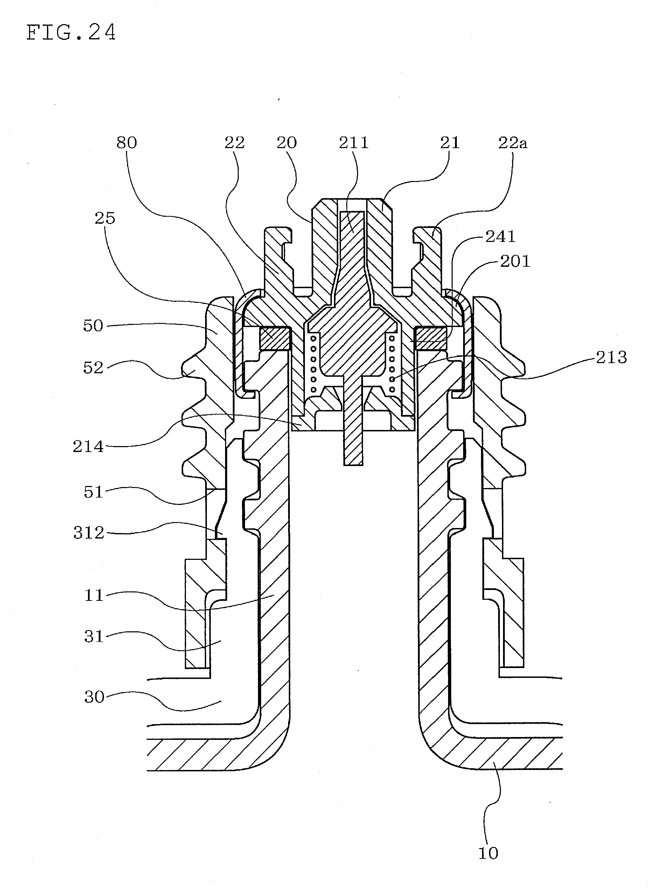

Next, a fourth embodiment of the refuelling container according to the present invention will be explained.
Here, Fig. 24 is a sectional view of a main part showing the outline of this embodiment and corresponds to the L-L section of Fig. 17(b) of the third embodiment. This embodiment is regarded as a modification of the foregoing third embodiment.

In this embodiment, a rising portion 31 covering the periphery of the base portion side of the nozzle portion 11 of the container body 10 is formed on the holder 30 and a cylinder member 50 provided with a cap installing means is installed on this rising portion 31.

Here, in the illustrate example, a fitting hole 51 is formed in the cylinder member 50 by drilling and a fitting projection 312 formed on the rising portion 31 is fitted into the fitting hole 51, thereby enabling the cylinder member 50 to be installed. However, specific means for installing the cylinder member 50 is not limited to the illustrated example.

Also, in this embodiment, a screw portion 52 as a cap installing means is formed on the outer peripheral surface of the cylinder member 50 and the cap 70 can be attached as shown in Fig. 10.

When the screw portion 52 is formed as the cap installing means on the cylinder member 50 constituted as a separate material from the container body 10 made of a flexible material, a hard base material is used for the cylinder member 50 to secure the strength of the screw portion 52 and also, the screw having a sharp shape is formed, whereby the cap 70 can be uncoupled with difficulty.

Generally, in the case of installing the cap 70 on the container body 10 made of a flexible material, it is difficult to secure the strength of the nozzle portion 11 for binding the cap 70 by screw fastening, bringing about such a phenomenon that the nozzle portion 11 of the container body 10 is deformed, causing screw fastening of the cap 70 to be hindered and the cap 70 to fall down. However, according to this embodiment, such disorders can be efficiently avoided.

The cap installing means is not limited to the formation of the screw portion 52 as is illustrated but such a structure may be adopted in which the cap 70 is fitted with the cylinder member 50.

This embodiment is different from the foregoing third embodiment in this point, and has the same structure except for this. Therefore, detailed explanations of other structures will not be described here.

### (Fifth embodiment)

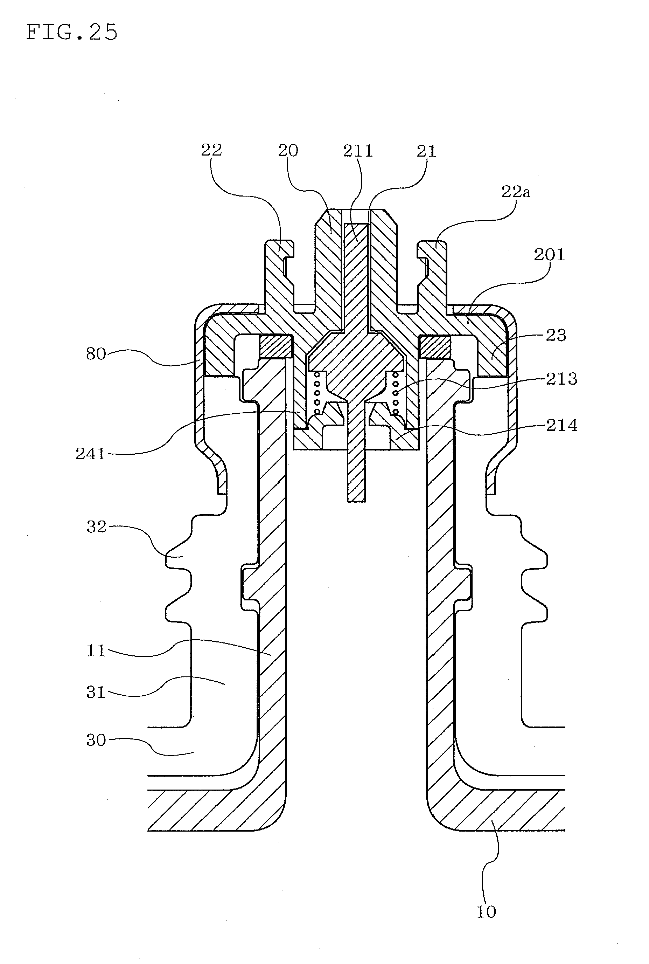

Next, a fifth embodiment of the refuelling container according to the present invention will be explained.
Here, Fig. 25 is a sectional view of a main part showing the outline of this embodiment and corresponds to the L-L section of Fig. 17(b) of the third embodiment. This embodiment is regarded as a modification of the foregoing third embodiment.

In the foregoing third embodiment, a caulking member 80 is stretched over and secured to the coupler 20 and the nozzle portion 11, thereby tightly securing the coupler 20 to the nozzle portion 11. However, specific means used to tightly secure the coupler 20 to the nozzle portion 11 is not limited to this.
In this embodiment, a rising portion 31 covering the periphery of the nozzle portion 11 of the container body 10 and extending close to the lower end of the ceiling plate portion 201 of the extended coupler 20 is formed on the holder 30 and the caulking member 80 is stretched over and secured to the rising portion 31 and the coupler 20 to thereby tightly secure the coupler 20 to the nozzle portion 11.

Also, in this embodiment, a turn-stopper means preventing the coupler 20 from being relatively turned with respect to the nozzle portion 11 may be formed between the coupler 20 and the rising portion 31.

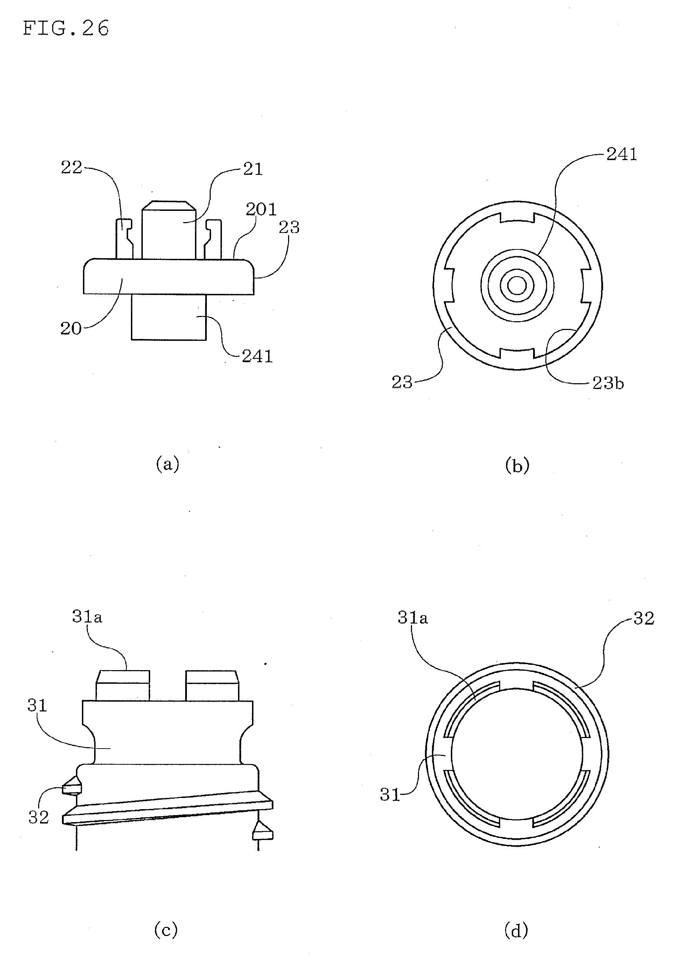

For example, as shown in Fig. 26, a part of the inner peripheral surface of the outer peripheral cylinder portion 23 hung from the outer peripheral edge of the ceiling plate portion 201 of the coupler 20 is notched to form a concave portion 23b and also, projected strip 31a engaged with the concave portion 23b is formed on the upper end edge of the rising portion 31 to constitute turn-stopper means for the coupler 20 by the concave portion 23b of the coupler 20 and the projected strip 31a of the rising portion 31.

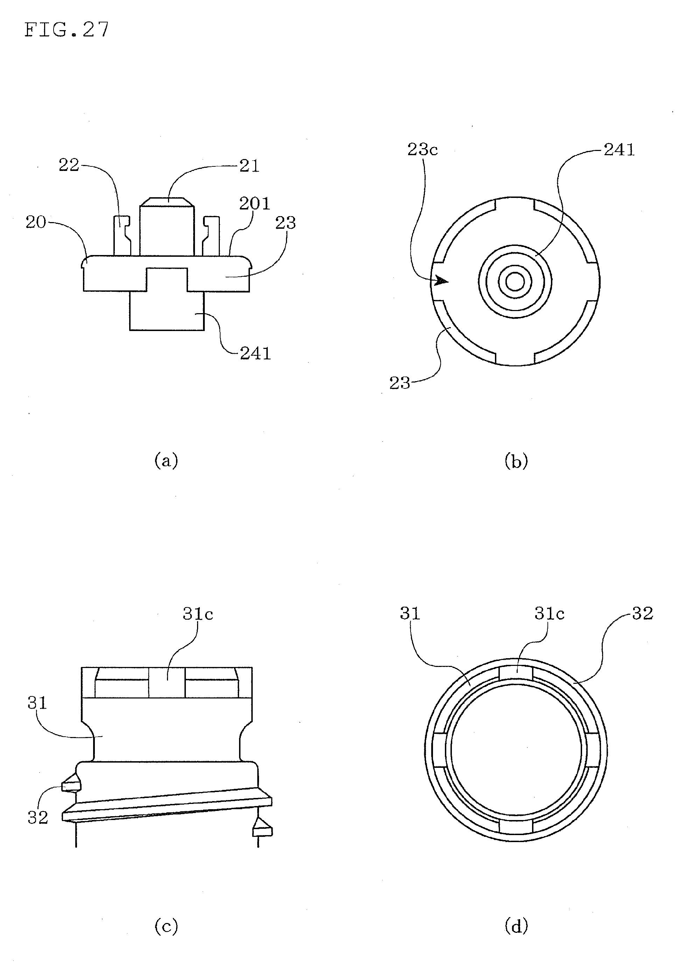

Also, as shown in Fig. 27, a structure may be adopted in which a part of the inner peripheral surface of the outer peripheral cylinder portion 23 hung from the outer peripheral edge of the ceiling plate portion 201 of the coupler 20 is notched to form a notch portion 23c and also, the upper end side of the rising portion 31 is thinned except for the convex portion 31c such that the notch portion 23c of the coupler 20 and the convex portion 31c of the rising portion 31 are engaged to each other to constitute the turn-stopper means for the coupler 20.

Particularly, when the foregoing twist lock mechanism is adopted as the engaging means for engaging with the fuel receiving unit of the fuel cell, it is effective to provide such a turn-stopper means. However, there is no particular limitation to the specific structure of the turn-stopper means insofar as it functions as a stopper for preventing the coupler 20 from being turned resultantly.

Here, Fig. 26 is an explanatory view showing one example of the turn-stopper means for the coupler 20, wherein Fig. 26(a) is a side view of the coupler, Fig. 26(b) is a bottom plan view of the coupler, Fig. 26(c) is a side view of the rising portion and Fig. 26(d) is a top plan view of the rising portion. Fig. 27 is an explanatory view showing another example of the turn-stopper means for the coupler 20, wherein Fig. 27(a) is a side view of the coupler, Fig. 27(b) is a bottom plan view of the coupler, Fig. 27(c) is a side view of the rising portion and Fig. 27(d) is a top plan view of the rising portion.

Moreover, in this embodiment, a screw portion 32 is formed as a cap installing means similar to that formed on the cylinder member 50 in the foregoing fourth embodiment, on the outer peripheral surface of the rising portion 31. The cap 70 can be installed by this screw portion 32. This can effectively avoid such disorders that screw fastening of the cap 70 is hindered and the cap 70 falls down when the rising portion 31 is formed of a hard raw material.

This embodiment is different from the foregoing third embodiment in this point, and has the same structure except for this. Therefore, detailed explanations of other structures will not be described here.

### (Sixth embodiment)

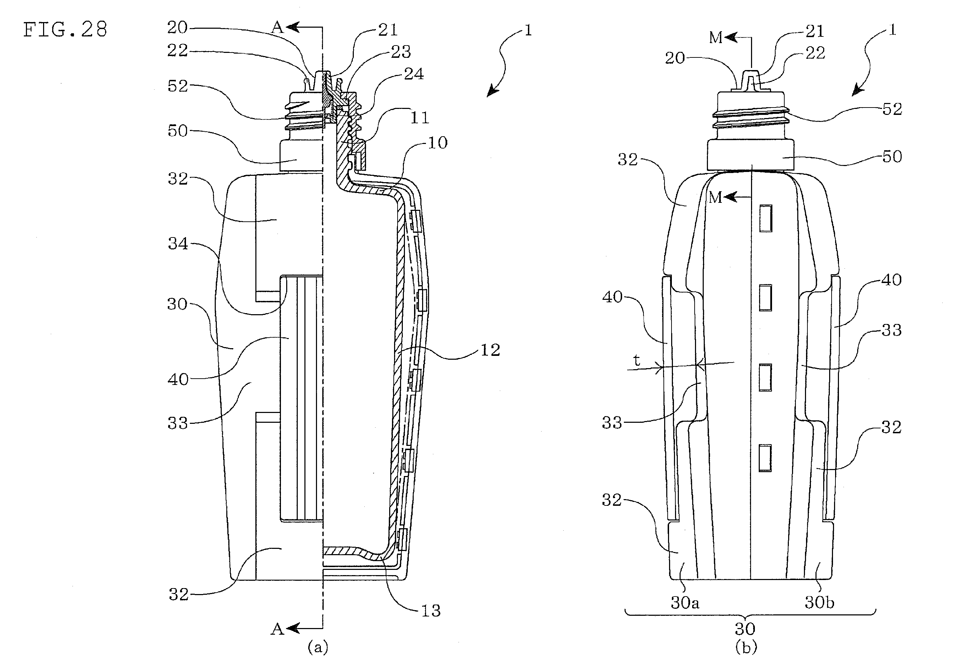

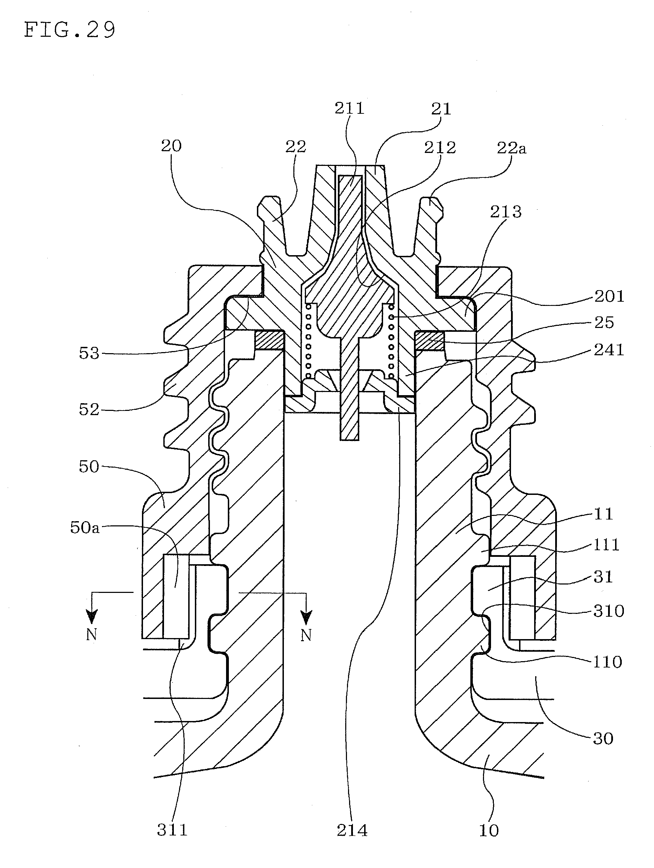

Next, a sixth embodiment of the refuelling container according to the present invention will be explained.
Here, Fig. 28(a) is a partially broken front view showing the outline of this embodiment, Fig. 28(b) is a schematic side view of this embodiment. Also, Fig. 29 is a view along the line M-M of Fig. 28(b). This embodiment is regarded as a modification of the foregoing first embodiment.

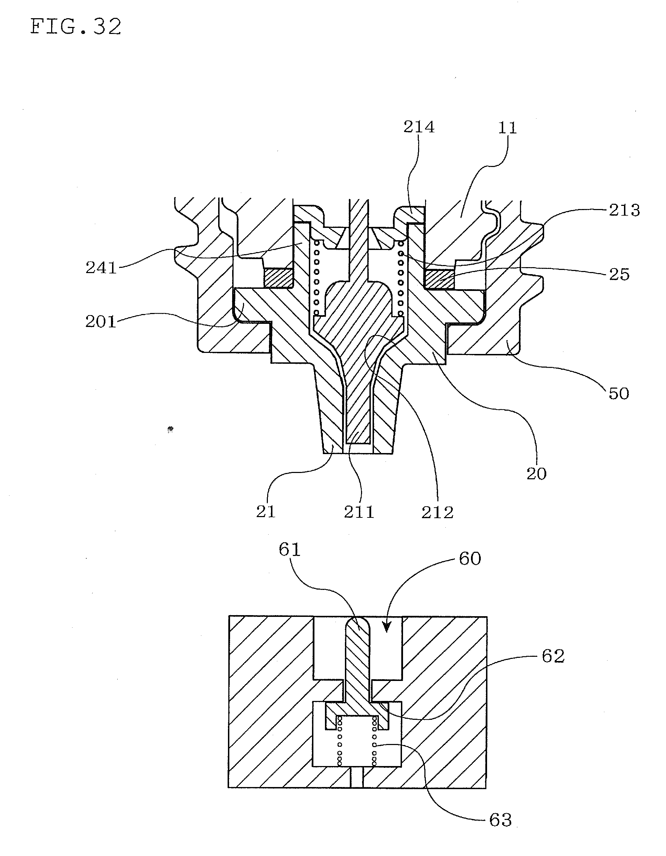

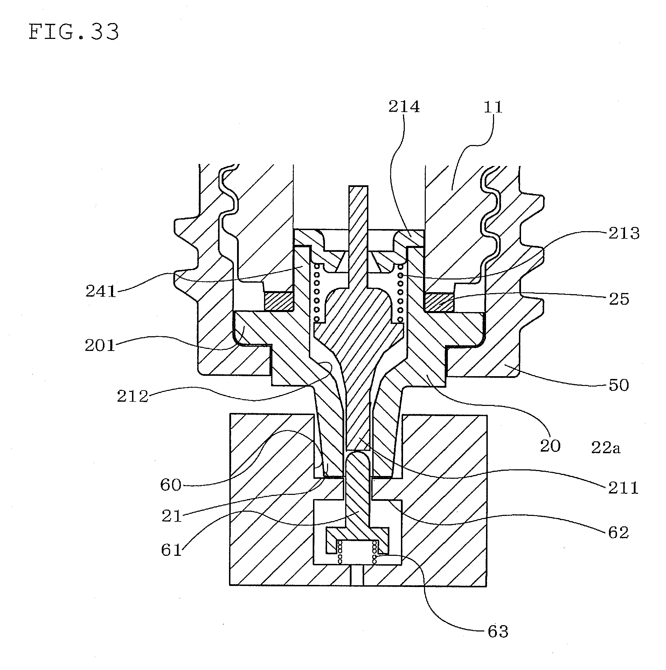

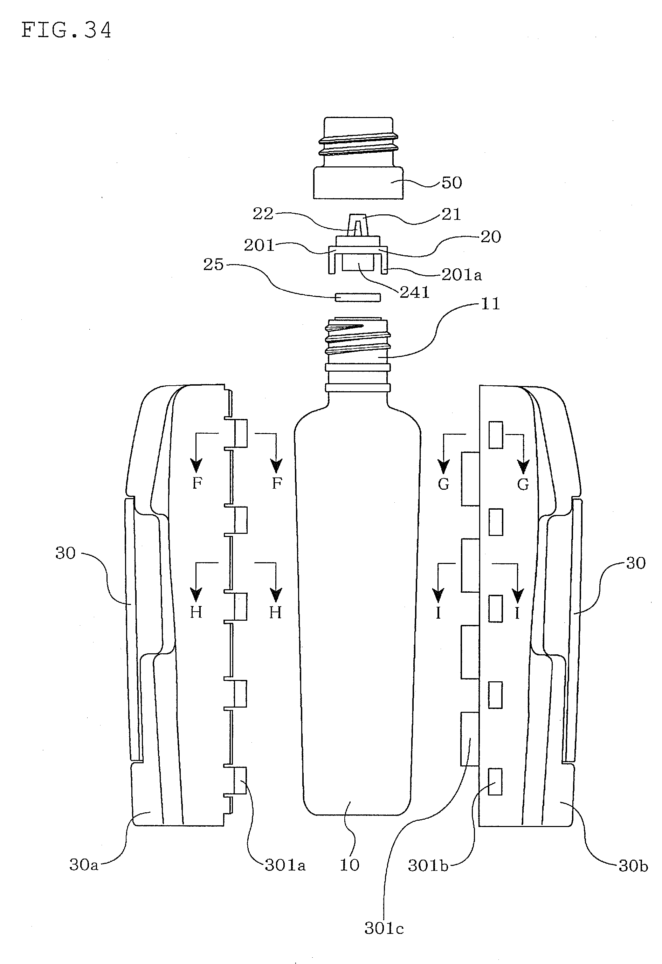

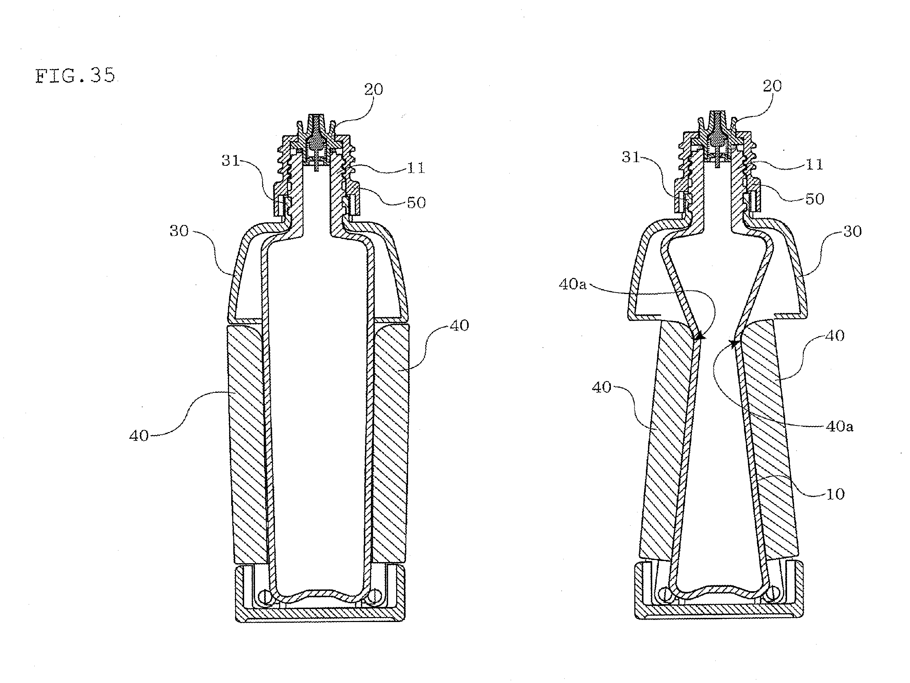

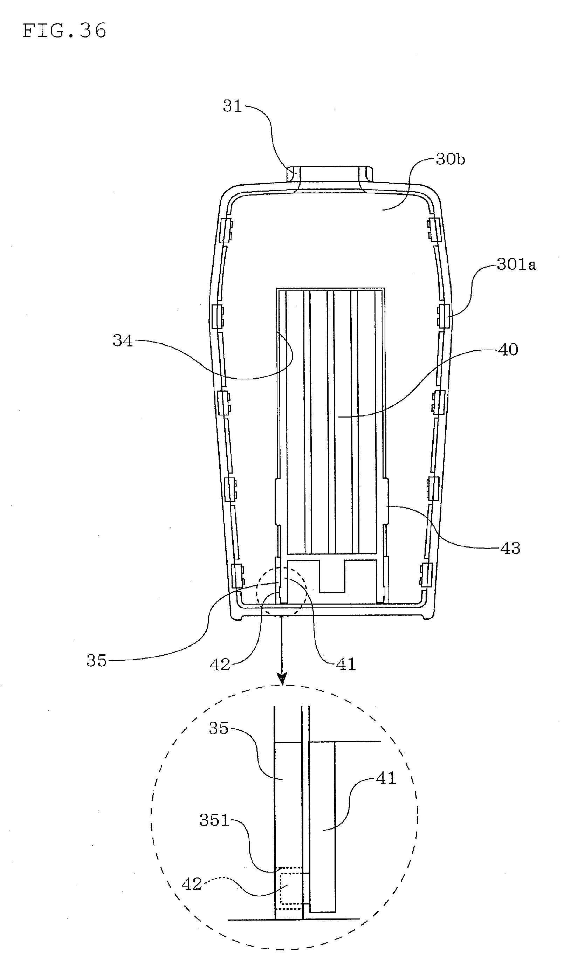

Figs. 32, 33, 34, 35 and 36 are views corresponding to Figs. 3, 4, 5, 8 and 9 shown in the first embodiment respectively to show this embodiment. Also, parts common to these figures are designated by the same reference numerals and according to the need, will be explained by quoting the explanations of the first embodiment. This is the same to a seventh embodiment which will be explained later.

In this embodiment, the coupler 20 is provided with a cylinder portion 241 which is communicated with the fuel ejection port 21 and provided with a valve mechanism in the inside peripheral side and a ceiling portion 201 hanging over the outer peripheral side of the cylinder portion 241.
In the situation where the cylinder portion 241 is inserted into an opening portion of the nozzle portion 11, a seal member 25 is interposed between the opening edge of the nozzle portion 11 and the ceiling plate portion 201 and the coupler 20 is mounted on the nozzle portion 11, the cylinder member 50 to be engaged with the coupler 20 is screwed into the nozzle portion 11, thereby tightly securing the coupler 20 to the opening edge of the nozzle portion 11.

Though, in the illustrated example, a step portion 53 formed on the opening edge on the upper side of the cylinder member 50 is brought into contact with the upper surface of the ceiling plate portion 201 of the coupler 20, thereby the cylinder member 50 is engaged with the coupler 20, a specific means for engaging the cylinder member 50 with the coupler 20 is not limited to this.

In this embodiment, the coupler 20 is tightly secured to the opening edge of the nozzle portion 11 while engaging it with the cylinder member 50 in the situation where it is mounted on the nozzle portion 11. For this, when the coupler 20 is installed, the coupler 20 itself is relatively stationary with respect to the nozzle portion 11. It is therefore possible to limit the generation of frictional powdery refuses resulting from friction among the coupler 20, seal member 25 and nozzle portion 11, thereby efficiently preventing disorders such as denaturing of fuel and generation of clogging due to the mixing of these frictional refuses in the fuel filled in the container body.
Also, the coupler 20 is pressed against the nozzle portion 11 of the container body 10 by the cylinder member 50 so that it cannot be uncoupled with ease to thereby prevent the coupler 20 from being detached from the nozzle portion 11 of the container body 10 carelessly.

Here, the seal member 25 may be formed using, for example, a thermoplastic elastomer, rubber or foam sheet in the same manner as in the first embodiment.
A rubber type material is superior in heat resistance but easily generates frictional refuses on the contrary. However, in this embodiment, the generation of frictional refuses can be restricted as mentioned above. Therefore, in this embodiment, even a seal member 25 made of a rubber type material having high heat resistance may be used in a good working condition.

Although not particularly illustrated, the coupler 20 may be engaged with the nozzle portion 11 by concave-convex fitting when the coupler is mounted on the nozzle portion 11. There is no particular limitation to the method of mounting the coupler 20 insofar as the coupler 20 can be tightly secured to the opening edge of the nozzle portion 11 in the situation where the coupler 20 is relatively stationary with respect to the nozzle 11.

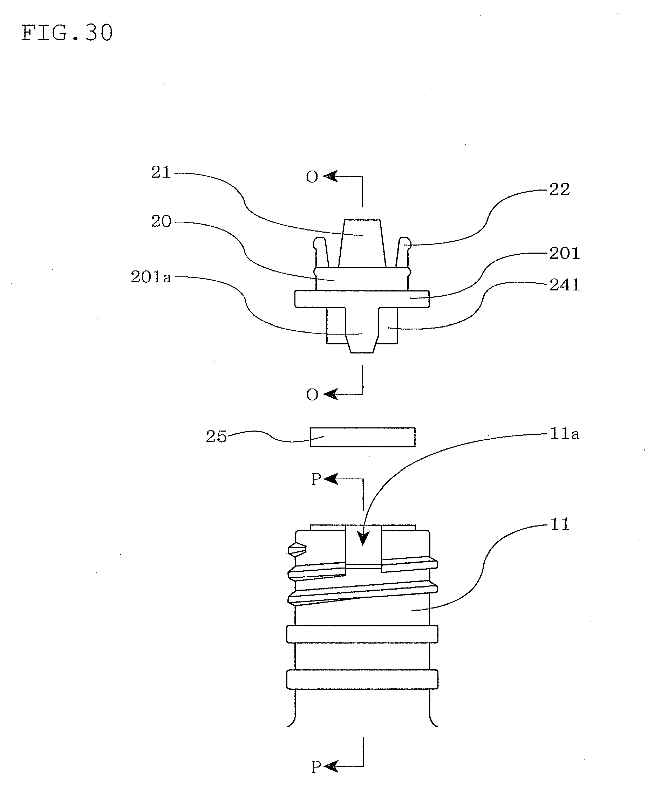

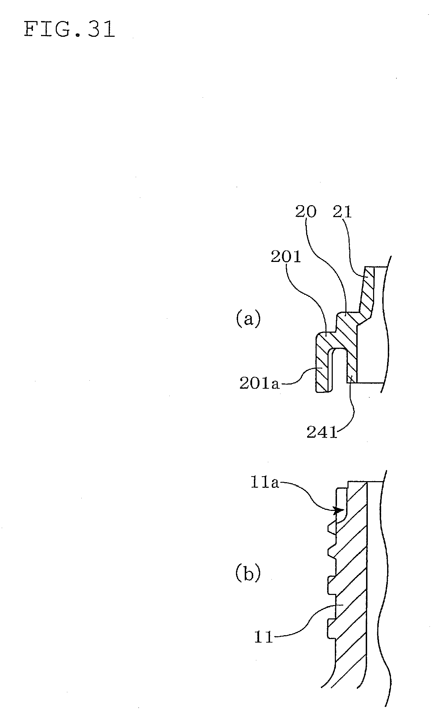

Also, in this embodiment, as shown in Figs. 30 and 31, a notched groove 11a may be formed on the outer peripheral surface of the opening edge side of the nozzle portion 11 and also, a projected strip 201a engaged with this notched groove 11a may be formed in such a manner that it hangs from the outer peripheral edge of the ceiling plate portion 201 of the coupler 20, to thereby constitute a turn-stopper that limits the turning of the coupler 20 with respect to the nozzle portion 11.

This structure can prevent the coupler 20 from being turned with respect to the nozzle portion 11 without fail when the coupler 20 is engaged with the cylinder member 50 and can also prevent frictional refuses from being generated by friction among the members more efficiently.
Also, when the coupler 20 is bound with the fuel receiving unit of the fuel cell, the turning of the coupler 20 is prevented and also the position where the coupler 20 is installed can be positioned. Also, when the container body 10 has an elliptic sectional shape, the direction of the container body 10 in the fuel injecting operation can be limited.

Here, Fig. 30 is an explanatory view showing one example of turn-stopper means for the coupler 20 and shows the situation where the coupler 20 and the seal member 25 are detached from the nozzle portion 11. Also, Fig. 31(a) is a sectional view of a major part along the line O-O in Fig. 30 and Fig. 31(b) is a sectional view of a major part along the line P-P in Fig. 30.

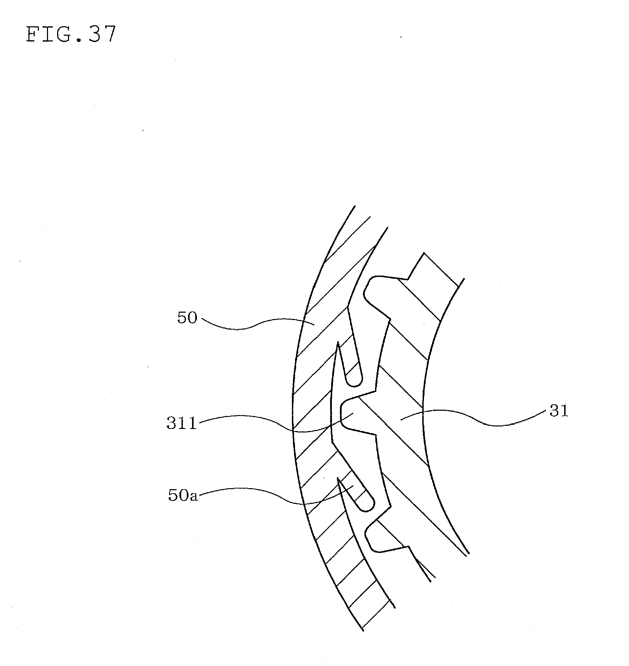

Also, in this embodiment, the a rising portion 31 rising so as to cover the surrounding of the base portion side of the nozzle portion 11 of the container body 10 is formed on the holder 30. Then, as shown by the sectional view of a major part along the line N-N of Fig. 29 in Fig. 37, a projected strip 50a projected in a slant direction toward the inside of the cylinder member 50 is formed on the inner peripheral surface of the lower end of the cylinder member 50 and also, a convex portion 311 to be engaged with this projected strip 50a is formed on the outer peripheral surface of the rising portion 31. This projected strip 50a of the cylinder member 50 and the convex portion 311 of the rising portion 31 form a ratchet mechanism that functions as a turn-stopper for the cylinder member 50 so as to prevent the cylinder member 50 from being turned in a direction opposite to the screw fastening direction, by the projected strip 50a of the cylinder member 50 and the convex portion 311 of the rising portion 31.
This prevents the coupler 20 from being detached from the refuelling container without fail to prevent fuel from being refilled.
When the turn-stopper for the cylinder member 50 as mentioned above is formed, a part corresponding to the convex portion 311 to be formed on the outer peripheral surface of the rising portion 31 of the holder 30 may be formed on the nozzle portion 11 of the container body 10. In this case, the rising portion 31 may be omitted according to the need.

Also, it is preferable to dispose a positioning means that positions the container body 1 with respect to the holder 30 on each of the inner peripheral surface of the rising portion 31 formed on the holder 30 and the outer peripheral surface of the nozzle portion 11 which faces the inner peripheral surface. In the illustrated example, it is so devised that a cyclic groove 310 along the direction of the periphery of the inner peripheral surface is formed on the inner periphery of the rising portion 31 and a cyclic projection 110 formed on the nozzle portion 11 side is engaged with this cyclic groove 310 to thereby position the container body 1 with the holder 30. Such a structure makes it possible to position the container body 1 at a position closer to the position where the coupler 20 and the cylinder member 50 are installed, and it is therefore to improve assembling accuracy of each member, which more improves the adhesion between the opening edge of the nozzle portion 11 and the coupler 20 (sealing ability).

In the illustrated example, the cyclic groove 310 formed on the inner peripheral surface of the rising portion 31 and the cyclic projection 110 formed on the outer peripheral surface of the nozzle portion 11 are formed continuously along the peripheral direction. However, it is only required to form one or more pairs of concave and convex shapes which are fitted with each other on the inner peripheral surface of the rising portion 31 and the outer peripheral surface of the nozzle portion 11 respectively insofar as they function as a positioning means. Also, as shown by the illustrated example, a second cyclic projection 111 brought into contact with the upper end surface of the rising portion 31 may be formed on the nozzle portion 11 side.

This embodiment is different from the foregoing first embodiment in this point, and has the same structure except for this. Therefore, detailed explanations of other structures will not be described here.

### (Seventh embodiment)

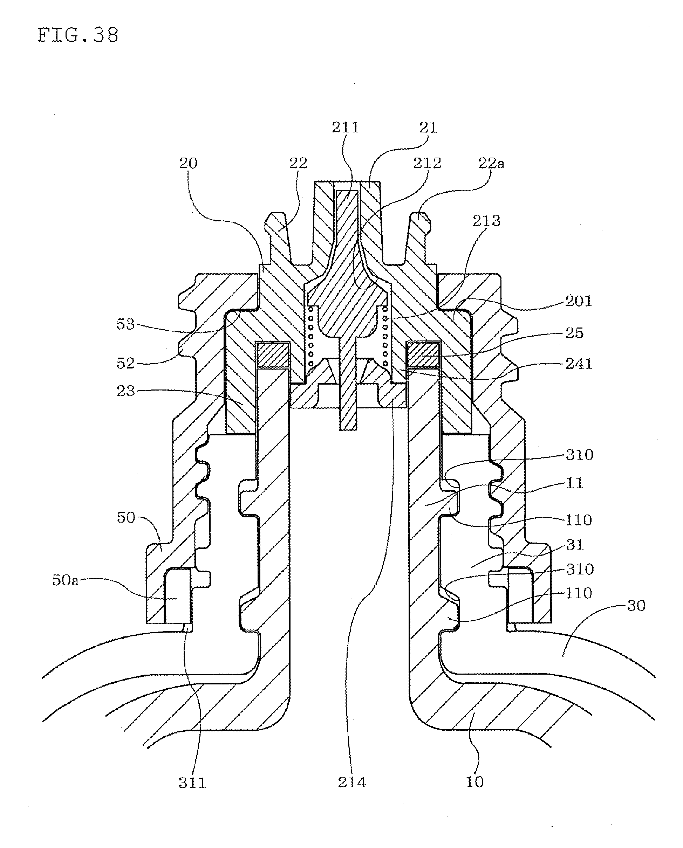

Next, a seventh embodiment of the refuelling container according to the present invention will be explained.
Here, Fig. 38 is a partially broken view showing the outline of this embodiment, and corresponds to the sectional view along the line M-M of Fig. 28(b). This embodiment is regarded as a modification of the foregoing

### sixth embodiment.

In the foregoing sixth embodiment, the cylinder member 50 is bound with the nozzle portion 11 of the container body 10 by a screw. However, in this embodiment, as shown in Fig. 38, the cylinder member 50 is bound by a screw with the rising portion 31 formed on the holder 30 to stretch the cylinder member 50 over the side surfaces of the coupler 20 and rising portion 31 to install the cylinder member 50, thereby tightly securing the coupler 20 to the nozzle portion 11.
Specifically, in this embodiment, it is so devised that the rising portion 31 is extended upward to bind the cylinder member 50 by a screw on the extended portion.

According to this structure, the cylinder member 50 is bound by a screw with the rising portion 31 formed on the holder 30 made of a rigid body. This structure is more resistant to dismounting of the cylinder member 50 and can avoid uncoupling of the coupler 20more efficiently than a structure in which the cylinder member 50 is bound by a screw with the nozzle portion 11 of the container body 10 made of a flexible material which is probably deformed.

In the example shown in Fig. 38, the coupler 20 is provided with an outer peripheral cylinder portion 23 which is hung from the outer peripheral edge of a ceiling plate portion 201 and formed concentrically with a cylinder portion 241. The rising portion 31 is extended close to the lower end of the outer peripheral cylinder portion 23. Then, it is so devised that the opening edge of the nozzle portion 11 is inserted together with a seal member 25 between the cylinder portion 241 of the coupler 20 and the outer peripheral cylinder portion 23.
A unit of a cyclic groove 310 of the rising portion 31 and a cyclic projection 110 of the nozzle portion 11 which are provided as a means of positioning the container body 1 with respect to the holder 30 is disposed on both upper and lower portions.

This embodiment is different from the foregoing sixth embodiment in this point, and has the same structure except for this. Therefore, detailed explanations of other structures will not be described here. In this embodiment, also, a turn-stopper means limiting turning of the coupler 20 with respect to the nozzle portion 11 may be provided.

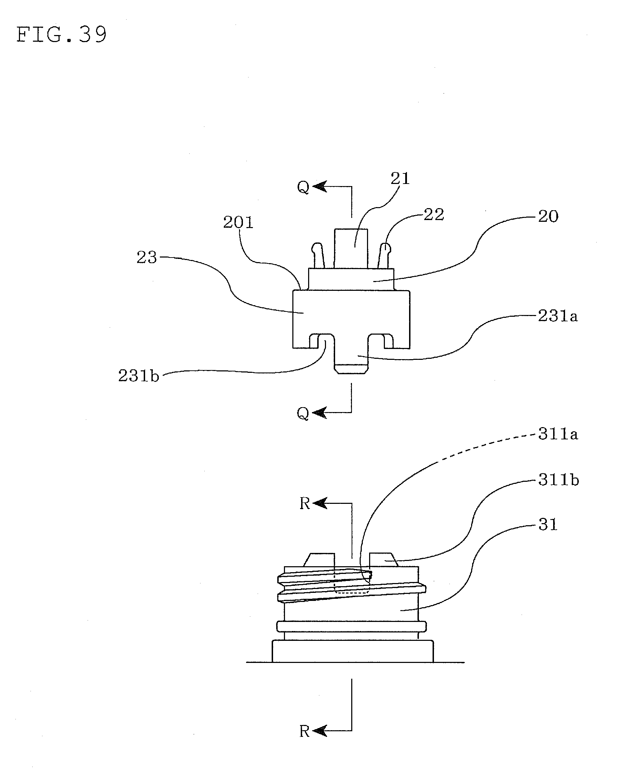

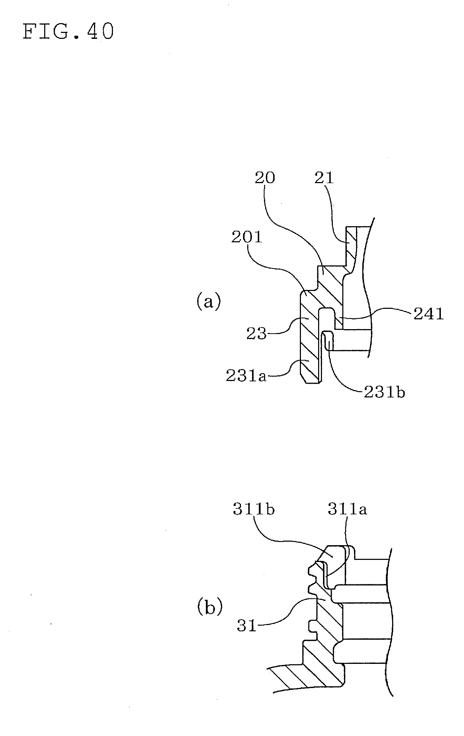

For example, as shown in Figs. 39 and 40, a notched groove 311a is formed on the inner peripheral surface of the upper edge of the rising portion 31 and a projected strip 231a engaged with this notched groove 311a is formed in such a manner as to project the lower end of the outer peripheral cylinder portion 23 or a projected strip 311b is formed on the projected strip 311b on the upper edge of the rising portion 31 and a notched portion 231b engaged with this projected strip 311b is formed by notching a part of the outer peripheral cylinder portion 23 of the coupler 20 to provide a turn-stopper means for the coupler 20.

Here, Fig. 39 is an explanatory view showing one example of a turn-stopper means for the coupler 20, Fig. 40(a) is a sectional view of a major part along the line Q-Q of Fig. 39 and 40(b) is a sectional view of a major part along the line R-R of Fig. 39.

Although the invention has been described in its preferred embodiment, the present invention is not limited to the above embodiments. It is obvious that the invention may be modified within the scope of the invention.

For example, the foregoing embodiments are so designed that the container body 10 is received in the holder 30 including the integrated surface member 30a and backface member 30b which can be separated from each other vertically. However, the structure of the holder 30 is not limited to this but may have a structure (though not shown) dividable laterally to receive the container body 10.

As is explained, the present invention provides a refuelling container that injects and supplies fuel from the outside into a fuel receiving unit of a fuel cell reduced in the residual quantity of the fuel in the fuel cell, such as a direct methanol type fuel cell, operated in such a system that liquid fuel such as alcohols is supplied directly without using a reformer to run an electrochemical reaction.

## Claims

1. A refuelling container for injecting and supplying fuel into a fuel receiving unit of a fuel cell from the outside, the container comprising:
a container body provided with a nozzle portion and made of a flexible material;
a coupler provided with a valve mechanism connected with a valve of the fuel cell and attached to said nozzle portion;
a holder provided with a rising portion covering the periphery of the base portion side of said nozzle portion and receiving said container body; and
a cylinder member engaged with said coupler and stretched over and installed on said coupler and the side surfaces of said rising portion.

2. A refuelling container according to Claim 1, wherein said coupler is fitted to said nozzle portion while the opening edge of said nozzle portion is inserted into between an outer peripheral cylinder portion and inner peripheral cylinder portion formed on said coupler.

3. A refuelling container according to Claim 2, wherein said cylinder member is provided with a turn-stopper means for said coupler.

4. A refuelling container according to Claim 1, wherein said coupler is bound with the outer peripheral surface of said nozzle portion by a screw while the opening edge of said nozzle portion is inserted into between an outer peripheral cylinder portion and inner peripheral cylinder portion formed on said coupler.

5. A refuelling container according to Claim 4, wherein engaging means for engaging with the fuel receiving unit of the fuel cell which means is formed as a separated body from the coupler is bound with the coupler which bounds with said nozzle portion by a screw.

6. A refuelling container for injecting and supplying fuel into a fuel receiving unit of a fuel cell from the outside, the container comprising:
a container body provided with a nozzle portion; and
a coupler provided with a valve mechanism connected with a valve of the fuel cell, the coupler being secured to said nozzle portion by a caulking member.

7. A refuelling container according to Claim 6, wherein said container body made of a flexible material is received in a holder made of a rigid body.

8. A refuelling container according to any one of Claims 6 and 7, wherein
said caulking member is stretched over and secured to the coupler and the nozzle portion.

9. A refuelling container according to Claim 8, wherein
a rising portion covering the periphery of the base portion side of said nozzle portion is formed on said holder; and
a cylinder member provided with a cap attaching means is installed on said rising portion.

10. A refuelling container according to Claim 7, wherein
a rising portion covering the periphery of said nozzle portion is formed on the holder and said caulking member is stretched over and secured to said coupler and said rising portion.

11. A refuelling container for injecting and supplying fuel into a fuel receiving unit of a fuel cell from the outside, the refuelling container comprising:
a coupler mounted on a nozzle portion of a container body, the coupler being provided with a valve mechanism connected with a valve of the fuel cell; and
the coupler is secured to the opening edge of said nozzle portion by a cylinder member which is to be engaged with said coupler.

12. A refuelling container according to Claim 11, wherein said container body made of a flexible material is received in a holder made of a rigid body and formed with a rising portion covering the periphery of the base portion side of said nozzle portion.

13. A refuelling container according to Claim 12, wherein said cylinder member is bound with said nozzle portion or rising portion by a screw and a cylinder member turn-stopper means is formed on said rising portion.

14. A refuelling container according to any one of Claims 12 and 13, wherein
said cylinder member is stretched over and installed on said coupler and the side surfaces of said rising portion.

15. A refuelling container according to any one of Claims 12 to 14, wherein
positioning means for positioning said container body with respect to said holder is provided on each of the inner peripheral surface of said rising portion and the outer peripheral surface of said nozzle portion facing that inner surface.

16. A refuelling container according to any one of Claims 11 to 15, wherein
the container further comprising a turn-stopper means of preventing the coupler from being turned with respect to the nozzle portion.

17. A refuelling container according to any one of Claims 1 to 16, wherein
said coupler is provided with engaging means for engaging with the fuel receiving unit of said fuel cell.
